# EUROPEAN PATENT SPECIFICATION

(11) **EP 2 732 160 B1**
(45) Date of publication and mention of the grant of the patent: **21.02.2018**
(21) Application number: 12784315.9
(22) Date of filing: 28.06.2012
(51) Int. Cl.: F04B 1/16, F04B 1/14, B60K 6/48

(54) **SELF ADJUSTABLE CONTINUOUSLY VARIABLE POWER TRANSMISSION SYSTEM WITH A REAL TIME VARIABLE FLOW PUMP.**
SELBSTEINSTELLBARES STUFENLOSES KRAFTÜBERTRAGUNGSSYSTEM MIT VARIABLER ECHTZEIT-FLUSSPUMPE
SYSTÈME DE TRANSMISSION DE PUISSANCE À VARIATION CONTINUE COMPRENANT UNE POMPE À DÉBIT VARIABLE EN TEMPS RÉEL.

(30) Priority: 28.06.2011 GR 20110100378; 29.06.2011 GR 20110100380
(43) Date of publication of application: 21.05.2014
(73) Proprietor: BOTSIS, Nikolaos, 104 43 Athens (GR)
(72) Inventor: BOTSIS, Nikolaos, 104 43 Athens (GR)
(86) International application number: PCT/GR2012/000027
(87) International publication number: WO 2013/001319

(56) References cited:
- WO-A1-98/47732
- WO-A1-03/036086
- WO-A1-2006/100528
- WO-A2-2008/133805
- DE-A1- 3 842 632
- US-A- 1 840 869
- US-A- 2 048 272
- US-A1- 2005 096 170

## Description

The present invention refers to a *mechanically self-adjustable* hydrostatic system of linear power transfer with a continuously variable transmission ratio, as well as for the conversion of mechanical into electrical energy that comprises a variable displacement pump interconnected with one or more hydraulic engines, as the case may be, along with a planetary gear system for hybrid coupling.

The variable displacement pump *linearly self-adjusts* its flow to the hydraulic engine, thus achieving a continuously variable power transfer system, or a continuously variable transmission (CVT), the pump with further application and, devoid of a hydraulic engine, by providing linear power to *hydraulic arms, robotics technology or without the use of hydraulic liquids by contributing to the evolution of air compressors, where variable loads are also present.*

It has a wide spectrum of application in numerous industrial sectors as belongs to technology's cutting edge, especially when constant or variable power is demanded with continuous system adjustment in the presence of a variable external load, such as:
*Automotive Industry* / *Transportation.*
   - ***Real Time Mechanically Self-Adjustable** CVT for power transfer used in vehicles, recycling of kinetic energy and obtaining the differentiation of angular speed in each driving wheel without the use of a differential gear mechanism.*
*Industry* / *Drilling* / *Mines.*
   - ***Self-adjustable CVT or Real Time Pump** for applications in agricultural, forest and construction engines, mine drilling, linear gear reducers, hydraulic presses, linear air compressors, linear pneumatic tools, pressure pumps and vacuum pumps.*
*Marine Industry.*
   - ***Self-adjustable CVT or Real Time Pump** with hybrid use of system for multiple* coupling on the same CVT unit, application in remotely controlled submersibles, movable cranes, *pulleys, anchor hoists, linear hydraulic pumps for shipyards usage.*
*Aeronautics* / *Aerospace* / *Robotics.*
   - ***Self-adjustable CVT or Real Time Pump** for usage in drilling mining equipment, space mission exploration, aircraft and space servo mechanisms for instant power demand. **Robotics Application.***
*Energy*
   - ***Self-adjustable CVT or Real Time Pump** for conversion of mechanical to electrical energy, for system application to hydroelectric power stations, for utilization of similar or different renewable energy sources (RES) on the same CVT unit for **electrical power production.***

Many industries undertake research, improvement and construction of hydrostatic / hydro mechanical CVTs for linear power transfer so as to tackle the problem of a continuously variable load with the least amount of energy losses. Consisting of an angular reduction mechanism, certain versions of such systems stem form a combination of hydrostatic and mechanical transmission, hydrostatic transmission and mechanical gearbox while relief valves prevent the hydraulic engine from over loading.
Other hydrostatic CVTs stem from the interconnection of a hydraulic engine and a variable flow hydraulic pump equipped with rotating pistons, the rods of which are attached on to a rotating disk being supported by a solid plate that is inclined to disk's axis of rotation. In that case, such a pump flow varies manually with the position change of the inclined and non rotating plate, in conjunction with a computer for the recognition of load variation, albeit not on real time. In any case, the linear variation is ***never a function of the external load.***
Although such a system consists of a variable displacement linear pump with a hydraulic engine, as far as the existing general state of the art, none of the current hybrid or no[hydrostatic systems has the capability to function similarly to that of the system presented herewith, *the operation of which is a continuous function with respect to an **external** load, thus rendering it a **real time self-adjustable mechanical CVT.*** An example of a known hybrid hydraulic propulsion system is described in WO 98/47732 A.

### Brief Description

The present invention refers to *a mechanical self-adjustable* hybrid hydrostatic system of power transfer of a continuously variable transmission ratio the conversion of mechanical into electrical energy.
It comprises a variable displacement *self-adjustable* piston pump equipped with a centrifugal mechanical shaft subsystem such as that of type -A1-, -A2- or -A3- and or more vane or piston hydraulic engines which are interconnected with the pump. The present system (as the case may be) has a mechanism for hybrid coupling with a second energy source (input), whereas its power output, depending on usage, has a single clutch that is able to be in active or passive continuous, nonetheless, coupling together with the generator's rotor, as in the example of the system's application to the automotive industry, where the vehicle's kinetic energy is converted to electrical energy.

Applied between a ship's propeller and its engine, the present system is useful in marine engineering for linear power transfer. It is also particularly useful in RES, such as in wind energy, for wind turbines (W/Ts) equipped with constant pitch blades, so as that they optimally make use of the available wind potential that is not achieved by the current W/Ts, as well as in tidal hydro power generators for taking advantage of underwater currents that are present between high tides and low tides.

The present system may consist of an in line or in parallel interconnected row of linear pumps, as the case may be, so that the volume of the hydraulic liquid provided to the engine may be multiplied within a full operational cycle. Furthermore it consists of two additional shaft subsystems thus constituting alternatively, linear *self-adjustable* pumps, which according to usage requirements, the appropriate pump may operate which results to the configuration of a *self-adjustable CVT,* while devoid of a hydraulic engine, the pump is suitable for numerous other applications.

The linear pump is dividable into parts, each of which has circumferentially arranged an equal number of cylinders, the pistons of which are set in reciprocating motion via a swinging disk through which passes a cam that, while in rotation, takes a tilted position being in rolling coupling with the carrier through which it rotates. The tilted position of the shaft causes the swinging disk to gyroscopically oscillate, so with each load change there is a corresponding change in the travel of its pistons, and this is due to the interaction of centrifugal force -F- exerted on to the shaft from eccentrically arranged centrifugal weights. Under the influence of its rolling coupling with rotor carrier/rotors as well as the centrifugal force caused by the centrifugal weights, *the shaft changes its position according to the prevailing load,* changing thus the travel or the continuous adaptation of the pump's piston travel. As a result, we have the configuration of a *mechanical self-adjustable pump of variable displacement,* or a hydrostatic power transfer system for handling variable external load of continuous flow that transfers hydraulic power to the hydraulic engine/s of the system with *continuous self-adjustable hydraulic energy input. CVT.*

In contrast to all existing linear hydro mechanical gearboxes CVTs, as well as existing hydraulic pumps that their angular adjustment depends on the cooperation with a computer, the present gearbox transmission possesses clear advantages because by effect of its mechanical operation, adjusts the output shaft angular speed of the hydraulic engines' power *on real time as a function of an external load. This renders it **mechanically self adjustable** since its shaft subsystem operates as **a mechanical torque measurins device.** Hence any human intervention or electronic processing for load response in such a system **is redundant.***

The system is suitable for energy conservation. Because its operation is a *continuous function of torque load, on one hand it minimizes losses, and on the other, considering its linear operation capability, it is unique for energy recycling.*
The present system accomplishes the following:
- The variation of angular speed or torque at the output given an input of constant or variable angular speed and torque, or
- A pre determined angular speed and torque at the output, given an input of constant or variable angular speed and torque.

A) In the first case, the gearbox can find application between the output of an internal combustion engine or of any other type of engine and a variable external load. Such applications are highly desirable in automotive industry (gearboxes), in marine engineering (propeller engines), other industrial sectors (drills, earth moving equipment, rotating buckets, etc.), and in general, in all applications where *a variable load occurs at the system's output shaft.*
B) In the second case, the gearbox can find application in any case where the is an input of variable angular speed and torque, while at the same time, the output demands stabilization of angular speed at a given torque. Such applications are highly desirable in electrical power produced by hydro turbines or gas turbines, where a constant rotational speed is mandatory at the output, in RES, such as W/Ts, as well as in tidal hydro power generators for taking advantage of underwater currents.

Using a self-adjustable CVT as the presented one here, the portion of the wind energy produced in W/Ts of the general state of the art, i.e., those equipped with constant pitch blades which is thus far lost, is now recoverable, when the wind force is lower or higher than nominal, as the wind rotor stalls and the power coefficient is greatly compromised without being utilized. It is also useful in centrifugal pumps and many other applications.

*"Especially with the use of the present self-adjustable CVT in hydro turbines and gas turbines a high increase in power coefficient can be achieved. Up to now, the output rotational speed is 'locked' and stabilized by the electrical grid, hence if the electrical demand is decreased, the generator, due to its idle power acts as an engine, while if on the other hand, demand is increased, it operates as a generator. Due to the fact the water flow is not always constant at the input and so that a constant angular speed is maintained at the output, there are times that the hydro turbine operates at optimal level, and other that is not. However, when this proposed CVT is placed between a hydro turbine and a generator, it is made possible for the turbine to operate at maximum efficiency throughout its entire range of rotational speed and torque, while at the same time the angular speed of the generator remains constant. It is evident that even 1% improvement of the electrical power coefficient in major power stations corresponds to billions kWh of energy".*

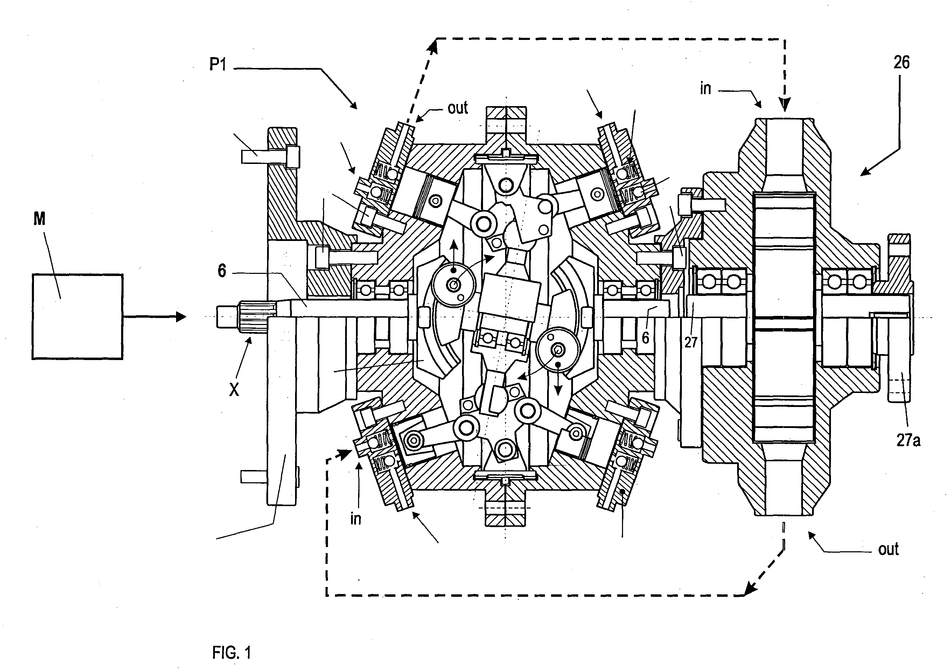

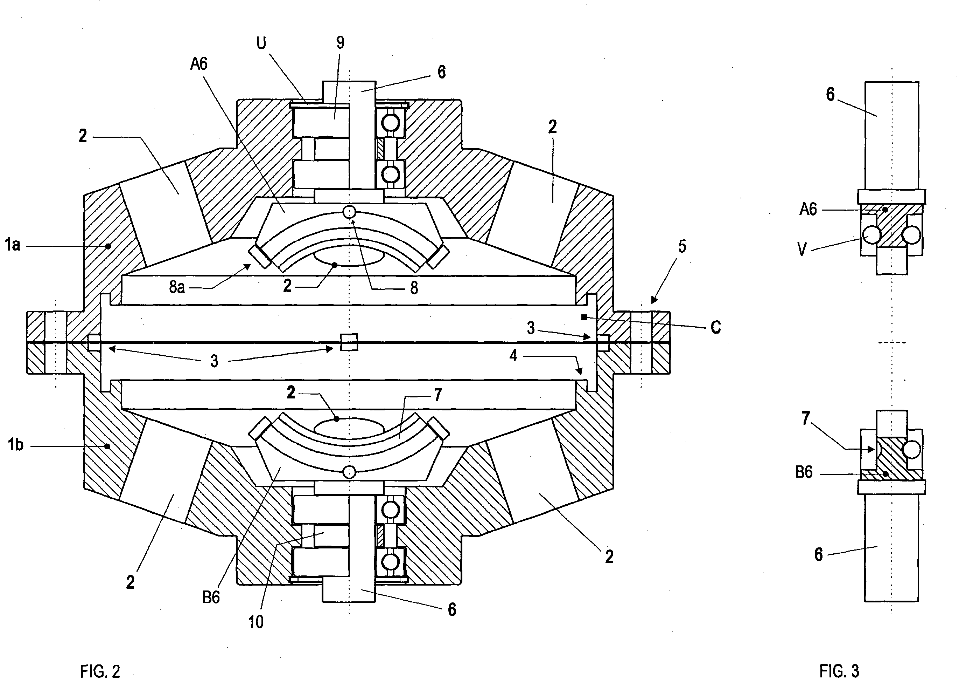

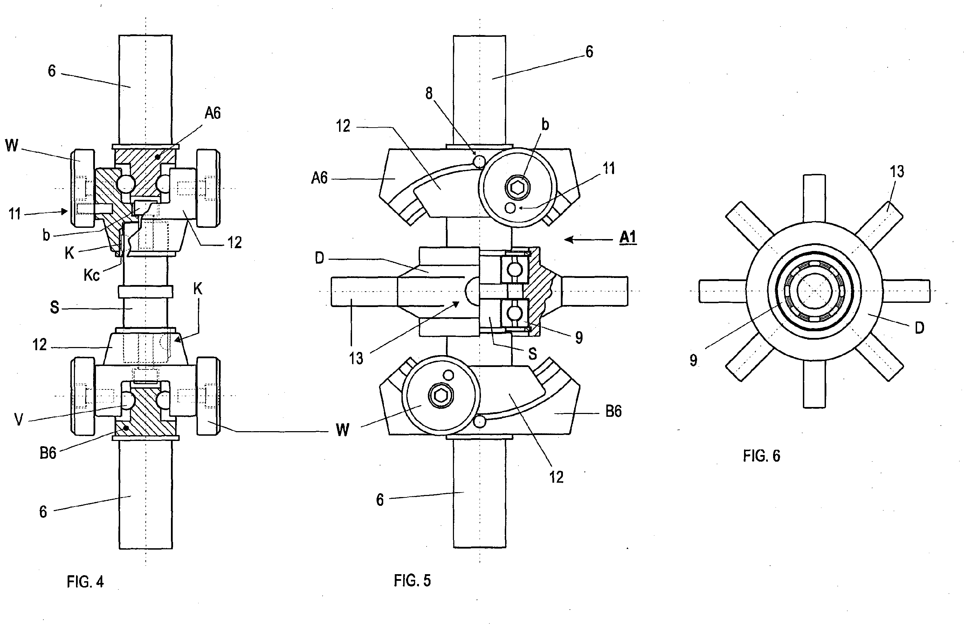

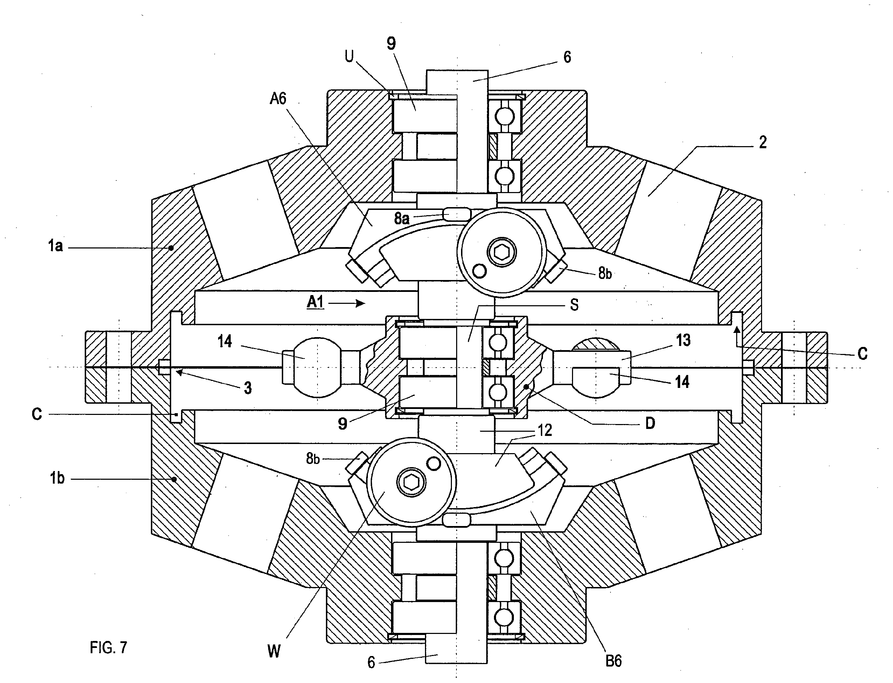

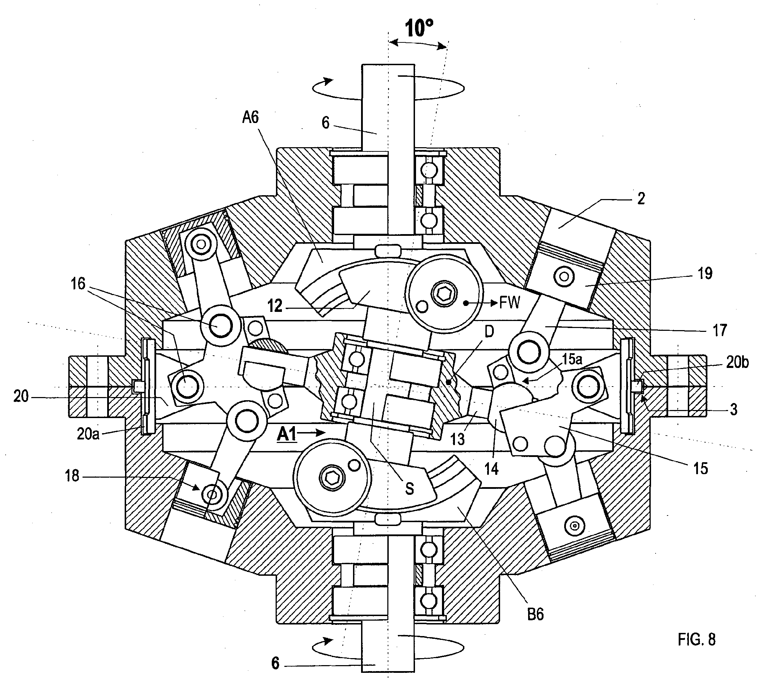

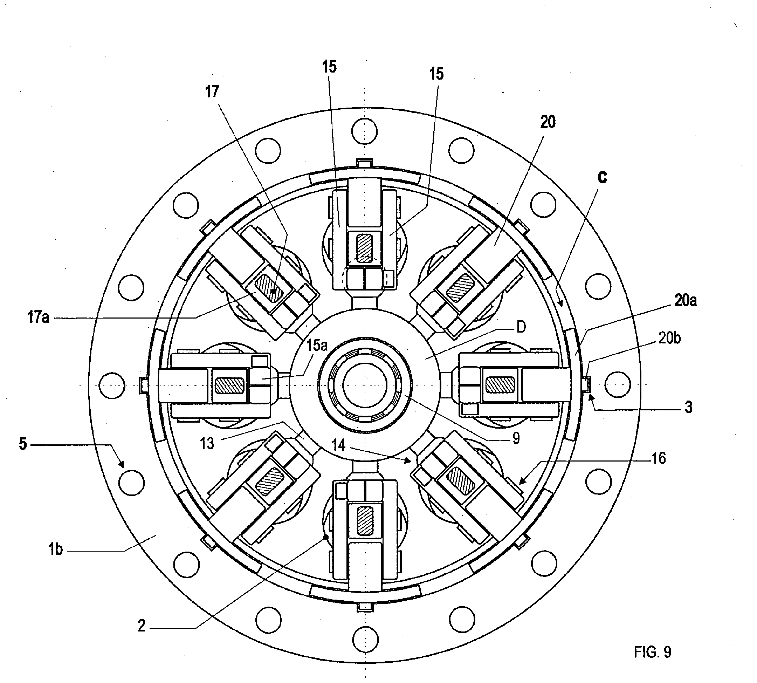

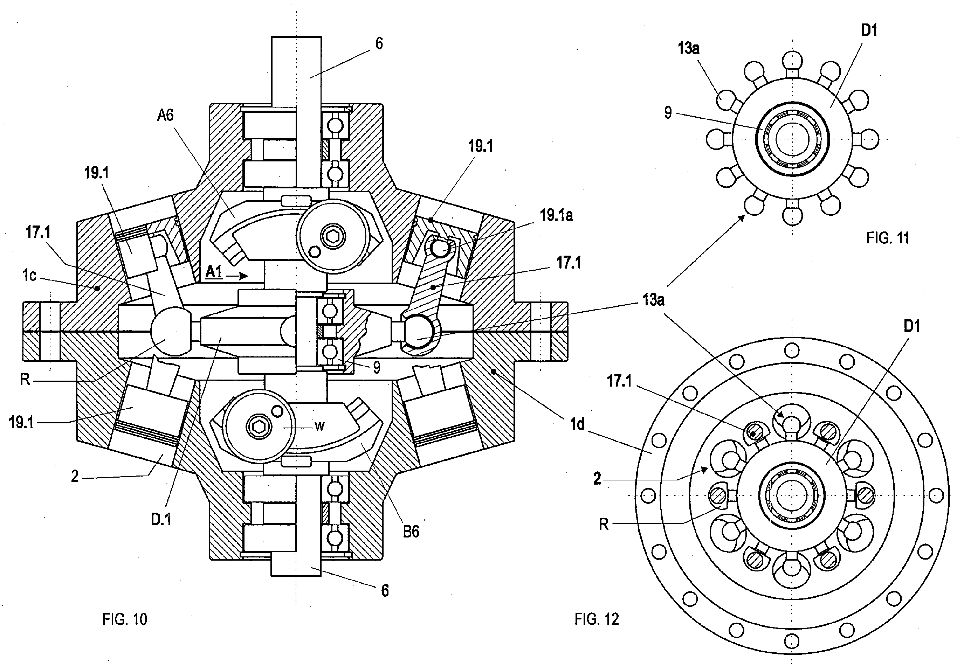

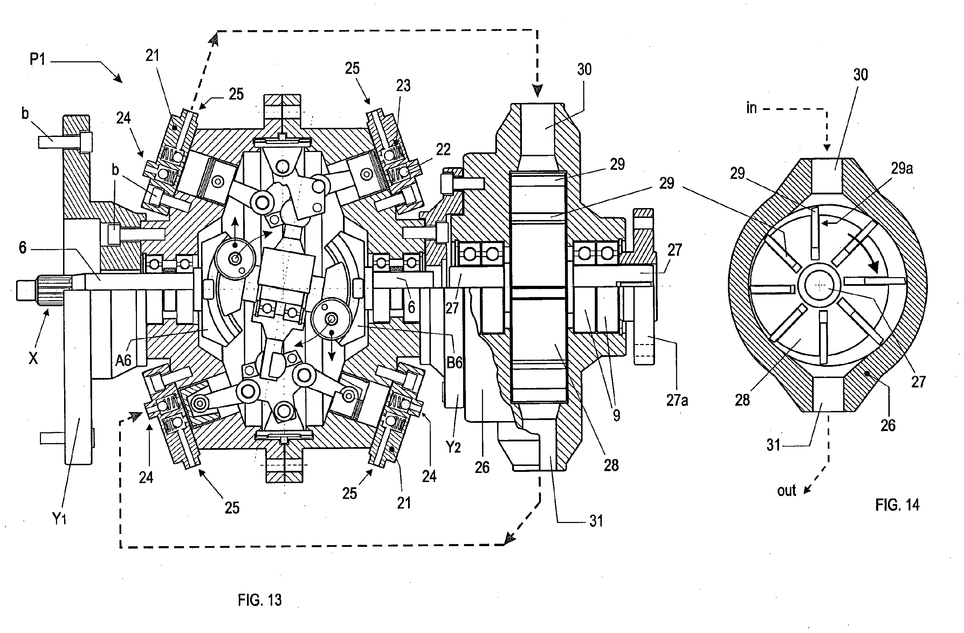

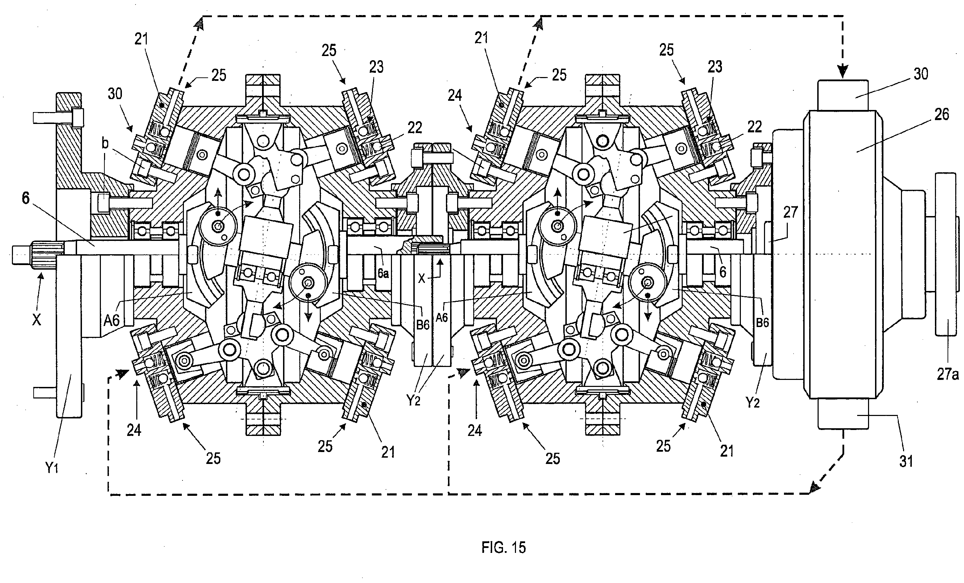

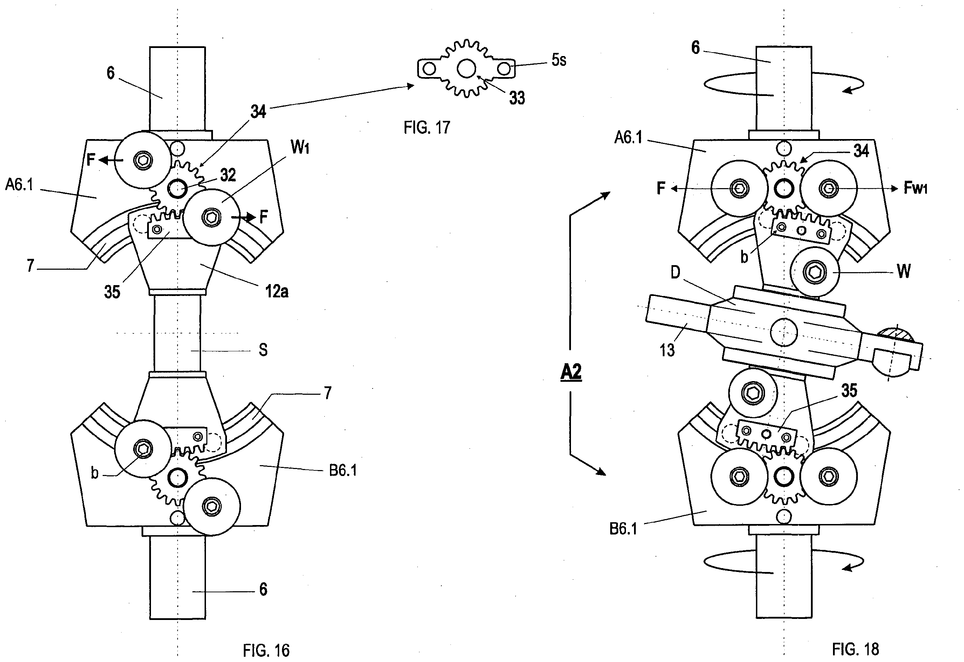

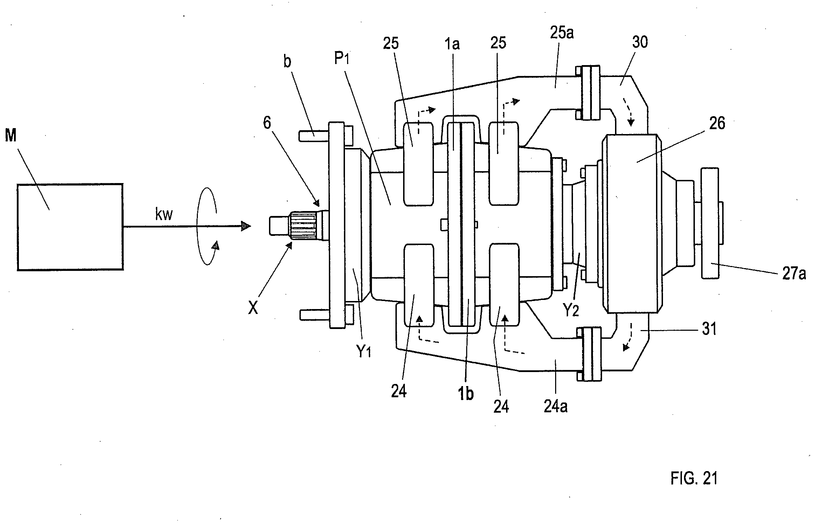

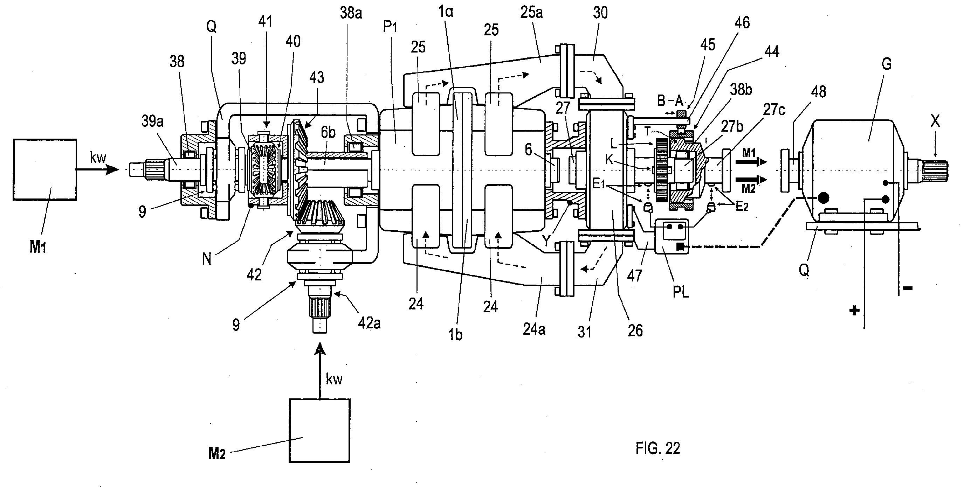

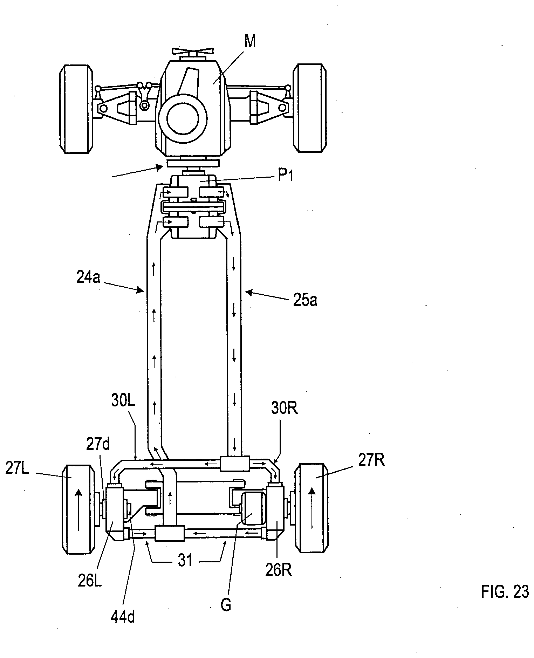

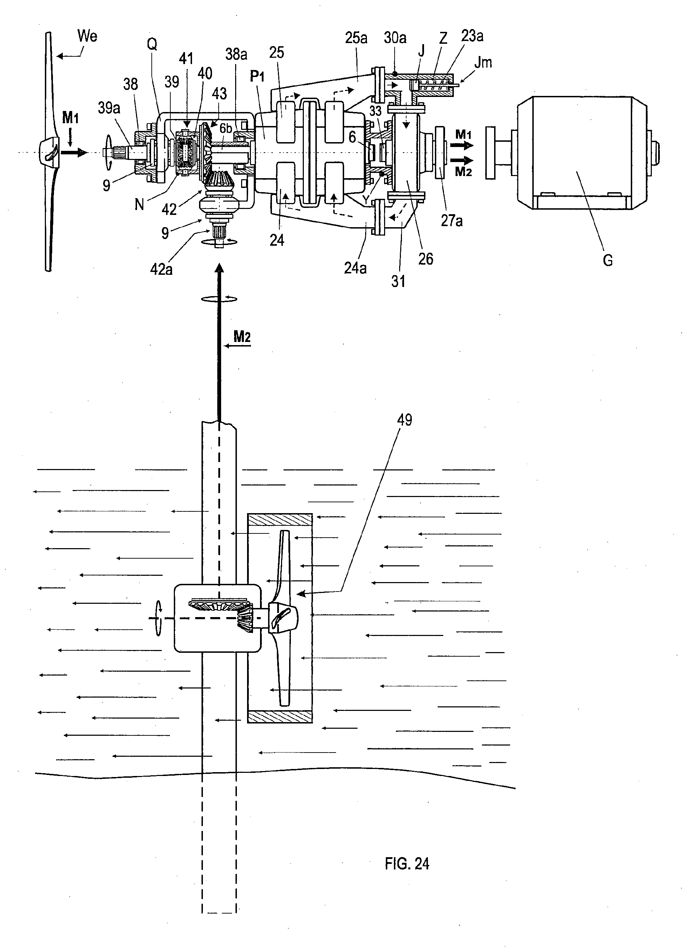

### Brief Figure presentation from Figures 1 through 25

Fig. -1- represents a cross section of the mechanical self-adjustable CVT, consisting of a pump (P1) and a hydraulic engine (26), interconnected with a pump that is supplied with power by an engine (M). The system with all of its elements is depicted in its simplest configuration, with all of its pump's cylinder heads arranged and schematically the hydraulic liquid flow that flows from the pump to the hydraulic engine and vice versa.

### Notice: Henceforth the hydraulic engine shall be denoted by H/E

Fig. -2- depicts a cross section of the dividable parts included within the pump's interior (P1). These are shells (1a-1b) within which the rotors' (A6-B6) shafts (6) are supported by ball bearings (9) and also constitute the shaft carrier (S).
Fig. -3- depicts a vertical arrangement and side view (half-section) the couple of rotors (A6-B6) that on either side of the front faces have channels (7) for the rolling of rolling balls (V) during the time needed for the shaft (S) to change positions.
Fig. -4- depicts a side view of the shaft (S) with centrifugal weights (W) through the use of rolling balls (V) between the heads (12) and the rotors (A6-B6) constituting its carrier. The heads (12) are embodied to the shaft ends through the screw (b).
Fig. -5- fully depicts the centrifugal subsystem type -A- of the pump (P1), consisting of a centrifugal shaft (S) the button of which passes through ball bearings (9) of the swinging disk (5). The shaft has heads (3) at its ends along with the eccentrically arranged centrifugal weights (W) coupled with its carrier / rotors, comprising a driving rotor (A6) and by the set in motion rotor (B6).
Fig. -6- depicts a top view of the disk (D) with one of the ball bearings (9), the disk shown in radial arrangement and equipped with buttons (13), the number of which is one half of total cylinders.
Fig. -7- depicts a cross section of the dividable shell (1a-1b) of the pump (P1) with the rotors (A6-B6) with its complete centrifugal mechanical subsystem -A1- along with the swinging disk (D), the cylindrical buttons (13) of which, have the free swinging through and through spherical bearing (14) for handling the necessary gyroscopic movements.
Fig. -8- depicts all the accessories included inside the pump (cross sectional view), such as the centrifugal shaft subsystem -A1- consisting of shaft (S) with its heads (12) and its swinging disk (D) having obtained a tilted position on the rotors (A6-B6) and with driving rotor (A6) set in symbolic rotation. Furthermore it shows pistons (19) with their rods (17), and the carrier (15) supporting them, as well as the plate (20-20a) used to support the carrier (15).
Fig. -9- depicts a top view of shell (1b) with all of the carriers (15) used in connecting the rods (17a) of the connecting rods (17), while the through and through spherical bearing (14), is in coupling with disk's (D) radially placed cylindrical buttons (13). Each one of the carriers (15) is coupled with base (20) which has its vertical side (20a) of a circle's arc, the upper and lower parts of which enter channels (C) in order to support the plate base (20).
Fig. -10- depicts the shaft subsystem -A1- supported by another couple of shells with the elements (1c-1d) and the alternative swinging disk (D1) equipped with spherical buttons (13a) with connecting rods (17.1) together with ball bearings in both ends of pistons (19.1) that carry spherical buttons (19.1a) where pump (P1) is connected.
Fig. -11- and Fig. -12- depict in top view, respectively the disk (D1) with spherical buttons (13a), and the shell (1d) having the tilted cylinders (2), while the disk (D1) precedes the pump (P2).
Fig. -13- depicts in cross sectional view the self-adjustable CVT, comprising the system's pump (P1) with the cylinder heads (21) interconnected with the H/E (26) provided with hydraulic power flow from the inlet duct (30), such flow coming from the pump's outlets (25). The hydraulic flow rotates the shaft (27-27a) of the H/E via the rotor (28), and through the outlet (31) and through the inlets (24), finally returning to the pump. In case that the pump (P1) is not coupled with a H/E but operates as an independent unit, as in a hydraulic press, then the outlets (25) of the pump provide hydraulic pressure to the pump piston. *In case of CVT operation and dependind on the system use, the inlet duct (30) of the H*/*E (26) is replaced by the alternative input duct (30a), as depicted in Fig. -24-.*
Fig. -14- depicts a top view - cross sectional view of the H/E (26) having a rotor (28) with vanes (29), the permanent stator contact of which, at low angular speeds, is accomplished with springs.
Fig. -15- depicts in cross-sectional view the system application with the use of two consecutive linear pumps (P1) for the increase in hydraulic flow to the H/E (26), having a similar operation with that of Fig. -13-.
Fig. -16- depicts a full view of the shaft subsystem -A2- with shaft button (S) along with heads (12a) in vertical position. In either side of the heads the racks (35) are embodied which are coupled with toothed balancing pinions (34) along with couples of centrifugal weights (W1) in contact with the front surfaces of each rotor (A6-B6).
Fig. -17- depicts the toothed balancing pinion (34), the centre of which bears a hole (33) for its rotation around axis (32). The ends of the toothed balancing pinion have holes (5s) for the stabilization of centrifugal loads (W1).
Fig. -18- depicts shaft subsystem -A2- with its driving rotor (A6.1) in a state of rotation, where the toothed balancing pinions (34) along with inertial loads (W1) of both rotors, as they exert centrifugal forces -F-, put the shaft (S) as well as the swinging disk (D) in a tilted position. Depending on operational demands, the shaft subsystem -A2- may carry the loads (W) towards reinforcing its inertial work, as shown in the figure.
Fig. -19- and Fig. -20- refer to the shaft subsystem of -A3- type. Fig. -19-depicts the shaft (S) in vertical position bearing heads (12b) with the toothed racks (35a) eccentrically arranged and in direct coupling with toothed gear (37). The shaft passes through the swinging disk (D), and via its heads is placed on its rotors / carrier (A6-B6) equipped with small shafts (25) used to support toothed gears (37).
Fig. -20- depicts the shaft subsystem of -A3- type fully deployed in rotation state, with shaft (S) together with swinging disk (D) in tilted position due to the centrifugal loads (W2) interaction. Each one of the (A6-B6) rotors is coupled with one another via a pair of toothed gears (one couple per each front surface), while one of those is directly coupled also with the toothed rack (35a).
Fig. -21- depicts the overall outer view of Fig. -1- and Fig. -13-, without including a cross sectional view of the mechanical elements, since the internal description of the CVT is completed. It comprises two shells (1a-1b) of the pump (P1), the H/E (26) along with input duct (30) and output duct (31), the interconnected ducts (25a) on one hand, connecting all of the pump's outlets with the inlet (30) of the H/E, and on the other hand the duct (24a) connecting the outlet (31) of the H/E with the inlets (24) of the linear pump. The engine (M) is symbolically shown as an energy source for powering input shaft (6) via coupler (X) in direct contact with the engine (M) output shaft.
Fig. -22- depicts an overall view of the self-adjustable power transfer CVT including a hybrid mechanical coupling with the two power inputs (39a) and (42a), the pump (P1) with H/E (26) as well as the energy recycling mechanism through the use of generator (G) bearing a rotor (48). The H/E (26) via the power shaft (27b) and the use of single clutch 38, transfers the power to the final output shaft (27c). Furthermore, the H/E (26) has the inlet duct (30a) in place of the inlet duct (30).
Fig. -23- refers to a system of self-adjustable linear power CVT with application in automotive industry that has two H/Es (26R-26L) being supplied with hydraulic power from the outlet (25a) of linear pump (P1). While flowing into the inlets of each H/E, the hydraulic fluid turns the rotors of the through and through shafts (27d) and via ducts (31) and (24a), returns to the pump (P1), while with the use of a single clutch the outlet shafts 44d ending in the wheels are set in rotation.
Fig. -24- depicts the capacity of hybrid coupling employed by the present linear system to tackle simultaneously similar or different sources of energy in a common inlet to the linear pump system with increased torque at the power shaft of H/E (26). In the present case the tidal power through a hydro turbine (49) and the wind energy through the W/T rotor (We), enter the power shaft (6a) of the pump using a planetary gear mechanism through planets (39) and (40) of gear satellites (41), of the drum (N) and the use of bevel gears (42) and (43), while the H/E (26) has an alternative inlet duct (30a).

### Invention description and assembly.

*The mechanical self-adjustable* hybrid hydrostatic continuously variable system used for power transfer of Fig. -1- comprises two basic parts, the linear pump (P1) and the H/E (26).
Regarding the linear pump (P1), its body consists of dividable shells (1a-1b) which, circumferentially bear cylinders (2), while each shell is configured so as to carry a pair of ball bearings (9) with safety pins (U) for supporting and turning two oppositely placed rotors (A6-B6) the shafts (6) of which are supported and roll via the above mentioned ball bearings, Fig. -2-.

The two oppositely facing rotors (A6-B6), as depicted in side view / cross section in Fig. -3-, are equipped with channels (7) in which spherical balls (V) roll used by the shaft (S) heads (12) for the rolling coupling with the above mentioned rotors, which constitute its carrier.

In Figures -4- and -5- shaft (S) is in "sliding" coupling with two independent rotors (A6) and (B6) through spherical balls (V), both in half cross section. Also shown is the embodiment of the shaft (S) button with heads (12) through nuts (b) and wedge (K) by using sliding coupling (Kc), for disruption of any possible rotation of the button around itself. Furthermore the consolidation of four centrifugal weighs (W) eccentrically arranged on the heads (12), thus rendering the shaft (S) able to vary positions.

The shaft subsystem -A1- is completed with the shaft (S) button passing through the centre of swinging disk (D) which has ball bearings (9) for the free button rotation of the shaft, Fig. -5- while the non rotating disk also has cylindrical radially placed buttons (13) for the coupling of connecting rods, Figures -5- and -6-.

The shaft subsystem -A1- is placed vertically (according to the figure) in the two dividable shells (1a) and (1b) consisting the pump's body - cross section, while in the disk (D) buttons (13) the through and through spherical ball bearings (14) are arranged, Fig. -7-. Also Fig. -5- and Fig. -7- depict shaft subsystem -A1- with its shaft in vertical position and coupled with rotors (A6) and (B6) which in each front surface have a protruding pin (8) and (8a) precluding the further to the left displacement of the shaft on its rotors, while at the rotors' ends on their lateral surfaces, safety pins (8b) are placed thus precluding any further to the right rotation of the shaft, beyond its design limit. On the buttons (13) of swinging disk (D) the through and through spherical bearings (14) are placed being supported by the corresponding case (15a) that belongs to the connecting rods carrier (15), for the necessary gyroscopic motion during the time of its rotation.
The coupling design of the ball bearing (14) between the buttons (13) and carrier (15), corresponding to Fig. -7- and Fig. -8-, is one of a number of solutions. The necessity for a gyroscopic motion is also satisfied through an articulated coupling of angular changes, such as the articulated cross, or through the use of a coupling of angular changes, type Rzeppa.

Fig. -8- depicts the linear pump (P1) which, apart from the shaft subsystem -A1- also has the pistons (19) with connecting rods (17) and carriers (15) coupled with the spherical bearings for gyroscopic operation (14) that buttons (13) of the swinging disk (D), while the pump appears to be in dynamic operation with both the centrifugal shaft (S) and swinging disk into tilted position. The reason being that the loads (W) eccentrically placed in an arrangement of axial balance aiming at the shaft subsystem rotation -A1- and as a result of its sliding coupling, by virtue of rolling while describing a circular arc, interact with the change of the shaft position, since each balance point depends on the corresponding *power input and load output.* Given the changes of these two parameters and as the swinging disk (D) follows shaft (S) in its various positions during the rotation of the shaft subsystem -A1-, the shaft enters a dynamic precession between a highest and lowest value, with the end result of having a continuously variable travel of the piston pumps, hence causing a variable flow of hydraulic liquid into the H/E.

The shells (1a-1b) as initially mentioned, have cylinders (2) circumferentially arranged as depicted in Fig. -2-, Fig. -7- and Fig. -8-, and especially in the top view of Fig. -9-. They are also equipped with a channel (C) for the plate base support (20-20a) on which carriers (15) of connecting rods (17) are attached. The immobilization of plate base (20a) is achieved via pin (20b) which enters cavity (3), Fig. -8- and Fig. -9-. Finally the outer shape of the shells (1a-1b) may be circular while having circumferentially holes (5) for their consolidation.

In reference with linear pump (P2), such a pump consists on one hand from dividable shells (1c-1d), and on the other hand from the swinging disk (D.1), which has the non rotating ball bearings (13a), to which rods (17.1) with corresponding female ends (R) respond, as well as through the use of pistons (19.1) Fig. -10-.
Apart from the previously mentioned changes in basic elements, the first major difference in pump (P2) lies in the swinging disk's (D.1) with the ball barings the number of which will always be even, Fig. -11- and each of its buttons corresponds to only one connecting rod, therefore to only one piston, in contrast with the pump (P1), the button number of which can be either odd or even. Since each button of the swinging disk (D) drives two connecting rods corresponding to two pistons.
The second major difference of pump (P1) from pump (P2) lies in the fact that the two connecting rods (17.1) are directed towards cylinders (2) on either side of the two shells, in a rod arrangement "one every other one", consequently the distance between the two cylinders along their circumferential arrangement becomes adequately large, Fig. -12-, top view. Certainly such an arrangement allows the construction of larger diameter cylinders with everything that this entails, in relation with the cylinders' diameter of pump (P1). The above mentioned pump (P2) operates with each shaft subsystem compatible with pump (P1). Hence when H/E (26) is interconnected, then one more self-adjustable linear system is assembled.

### Linear pump interconnected with H/E.

On the linear pump's (P1) cylinders, Fig. -13-, cross sectional view, the cylinder heads (21) are placed having the outlet ducts (24) and (25) incorporating a sealing valve system that stems from ball (22) and spring (23). However the same cylinder heads (21) as well as the inlet - outlet ducts (24) and (25) are also used for the completion of pump (P2) in Figures -10- through -12-.
Such a method with spherical valves for inlets - outlets for the flow of hydraulic liquid or gas is merely symbolic, therefore it can be used in any method of the existing general state of art for the sealing of the cylinders, such as with the rotating valves driven by engine shaft (6) or by valve rods.

Every cylinder head of the pump (P1), through outlet ducts (25) and inlet ducts (24) or of any other in line group of pumps where the hydraulic networks are shown in dashed lines as in Fig. -1- and Fig. -13-, are interconnected in a closed circuit operation with H/E (26), constituting *a mechanical self-adjustable CVT* in its simplest form for constant flow loads.
The power shaft (6) of the above mentioned system of linear power transmission has circumferentially located teeth (X) on its end, allowing it to connect and receiving its input from the output of power engine (M), whereas the spacer (Y1) and the screws (b) allow the system consolidation with the power engine. Through the linear pump (P1) the power flow ends to H/E (26), which, if embodied with the pump, spacer (Y2) is used, so that there is a distance of the independently rotating shafts as of the rotor axis (B6) of the pump and the shaft (27) of the H/E, Fig. -13-.
*More specifically: the linear pumps (P1) or (P2) are interconnected with H*/*E (26) which either has sliding vanes or it is a piston engine, however via the liquid power of the pump, its rotor (28) Figures -13- and -14-, is set in rotation, thus constituting a hydro mechanical CVT by the use of hydraulic liquid in a closed circuit operation.*

*"The system description is also given through an in line group of variable displacement linear pumps (P1) or (P2), interconnected with H*/*E (26) so as to provide hydraulic liquid double or a multitude in volume to the rotor (28) of H*/*E. In that case, the driven rotor (B6) of the first pump has shaft (6a) the end of which is coupled with toothed coupler (X) of the rotor's input of the second pump, as depicted in Fig. -15- "*

### The operation of the self-adjuastable CVT

Considered as a working assumption, the shaft subsystem -A1- finds itself outside a power operation mode and with shaft (S) in a vertical position. Consequently, all the buttons of the pumps' (P1) or (P2) swinging disk are horizontally located, as well as all pump pistons being out of operational phase, as depicted in pump (P2) of Fig. -10-.

When the system through the driving rotor (A6) is supplied with power, the centrifugal loads (W) through the exerted centrifugal force -F-, as a function of the prevailing load at output shaft (27a) shall cause a change in position of the shaft on to rotors (A6-B6) together with the swinging disk (D) or (D.1), as characteristically shown in the system mechanism of Figures -8-and -13-, symbolically in the amount of 10 degrees. The position change of the shaft brings a change to every other mechanism or element that is in direct coupling with the shaft, as the swinging disk with its connecting rods and all of its system pistons, each one of these pistons completing a fully operational cycle (intake - exhaust) after a full rotation of rotor (A6), while shaft (S) performs *gyroscopic precession in a dynamic operational mode.*

If the system power (6) inlet achieves constant rotational speed , then for every increase of the load, the angular speed of the power shaft (27a) to H/E will be decelerated since the pump's piston travel will be reduced, as a result of which volume flow of the hydraulic fluid to the H/E (26), and as a result of the increased back-pressure which would cause the increase of the load in the heads of the pistons of the system, Figures -1- through -13- and Fig. -15-.
Due to its capacity to *linearly self-adjust,* the system pump responds to the necessary deceleration of the shaft (27-27a) of output power shaft of H/E **and reduces the travel of its pistons,** *with an inversely proportional increase of system output torque, while the power of the input shaft (6) remains constant.*

As long as the system will be within the limits of its operation, the more the load keeps increasing, the more the travel of the pistons will be reduced in the pump.
In case there is a load increase beyond the expected limits, *then the shaft (S) button of the pump can even fully align itself with the imaginary axis going through the rotors resulting into the complete interruption of the pistons (zero travel)* **while the rotors and shaft** shall go on turning continuously.
Depending on the operational demands of the system and in case shaft (S) should not be perfectly aligned with the vertical imaginary axis of the rotors, in either sides of their faces, safety pins will be place of type (8c) of appropriate range that will hold the shaft in its least tilted position, while the more the pistons are retained in their least travel amount, the more the system provides increased torque.

*Conclusion: the present linear system's operation is **a continuous self-adjustment of power through a mechanical method as per necessary response to the load's torque on real time.***

### CVT with shaft subsystem -A2-

As an alternative proposition for the operation of the linear pump of the CVT, in the case that the shaft system -A2- is used, rotors (A6.1) and (B6.1) are employed, the front faces of which have shaft (32), Figures -16- and -18-, for the supporting either side of the two front surfaces of each rotor via a toothed balance pinion (34), as depicted in Figures -16-, -17- and -18-, which has a hole (33) in its centre for the support and rotation of shaft (32), while it has in its ends the threaded holes (5s) for the embodiment of the centrifugal or non carried loads (W1) on the shaft, Figures -16- and -18-.
Shaft (S) is also depicted of the shaft subsystem -A2- consolidated with the heads (12a) on the front faces of which toothed racks (35) are consolidated.

Every toothed balanced pinion (34) is in direct coupling with each toothed rack (35) located in both front faces of each head (12a), Figures -16- and -18-. In Fig. -16- the shaft subsystem is out of power operational mode with shaft (S) in vertical position, while the toothed balanced pinion (34) with the centrifugal loads (W1) is in a tilted position.
During the power input and depending on the resistance load, the centrifugal loads (W1) under the influence of centrifugal force -F- and in conjunction with the balanced pinion (34) arm, *in reference to the load arm which stems from the swing disk and the shaft via the toothed rack (35)*, will tend to align themselves horizontally onto the toothed rack, until they set the shaft (S) in tilted position.
Fig. -18- depicts the shaft subsystem in a dynamic state, under the influence of centrifugal force, with shaft (S) and swinging disk (D) being tilted symbolically in the amount of 10 degrees in relation with the vertical imaginary axis going through the rotors (A6.1-B6.1).

### CVT with shaft subsystem -A3-

In case of usage of the shaft subsystem -S3- as a second alternative for the CVT pump, rotors (A6.2) and (B6.2) are used, the front faces of which have a couple of shafts (32) for the support and operation of a two toothed gears (37) coupled together in each rotor front face, supported by the through and through sleeve (36), Figures -19- and -20-.

Fig. -19- depicts the shaft subsystem -A3- type having rotors (A6.2) and (B6.2) that are not in operation, with their heads (12b) coupled with shaft (S) with swinging disk (D) in vertical position, while the front faces of each rotor have shafts (32) for the support and coupling of the toothed gears (37), with arms (Gb) and the centrifugal loads (W2) equidistantly placed, so that the turning rotors are in complete counterbalance.

Each one of the heads on either side of its front face (front and rear) has a toothed rack (35a) eccentrically placed in relation with the imaginary axis which passes through the shaft subsystem with a shaft (S) in a vertical position, while each toothed rack (35a) that is placed on to the front surface of each head, faces oppositely from that of the rear surface, so that the shaft (S) and the shaft subsystem -A3- as a whole is counterbalanced.

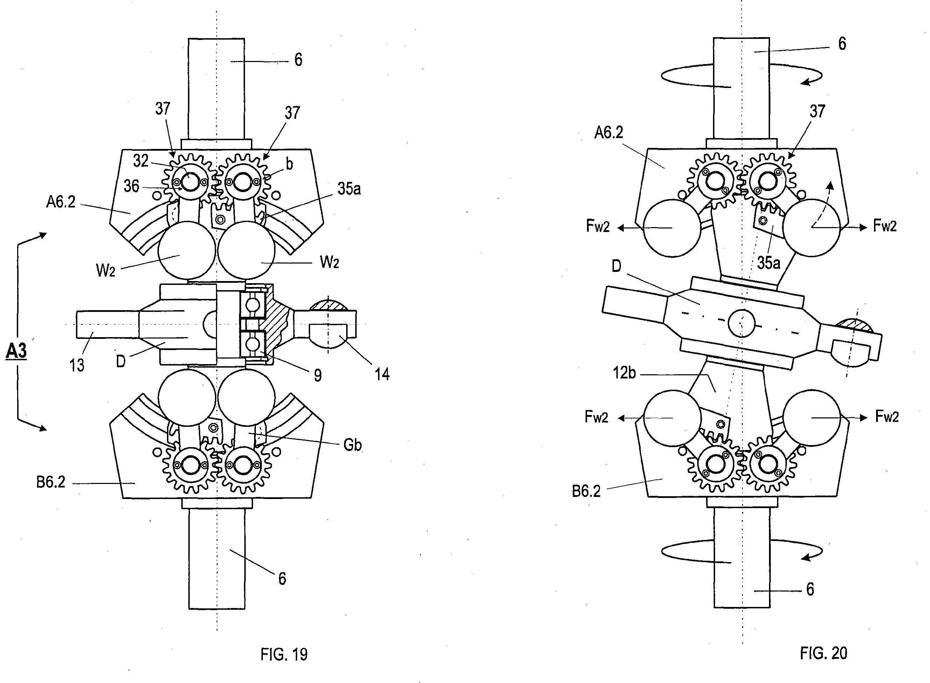

Each one of the toothed racks (35a) is coupled with one of the two toothed gears (37), while each gear on its front surfaces is embodied with arms (Gb) that carry the centrifugal separately supported loads (W2), Figures 19 and 20. Figure 20 depicts shaft subsystem -A3- in operational mode with the driving rotor (A6.2) rotating, together with arms (Gb) which carry the centrifugal weights (W2) fully deployed, while the shaft with the swinging disk in tilted position with the exerted centrifugal force F arising from loads (W2) sets the shaft in dynamic gyroscopic precession. On both front faces of each rotor there is a couple of toothed gears (30b).

When through the driving rotor (A6.2) under constant operational conditions, input power enters the shaft subsystem -A3-, Fig. -20-, the loads (W2) will exert a constant centrifugal force -F-, which will continuously tend to change the shaft position on to the rotors via the coupling of toothed gear (37) and the toothed rack (35a), as a function of the prevailing load value on the power shaft of H/E (26). In this case we have the following:
*the continuously exerted force on to the shaft (S), under constant operational conditions (power input relative with load output),* *functions mutually as a counterforce which is equated with load tendency, and is the cause that holds the shaft stably on to its carrier* / *rotors, as if in that position and under different circumstances the present shaft were consolidated.*

### The power transfer system in general depiction

Figure -21- depicts symbolically the general outer configuration of the self-adjustable system as referred to Fig.-13-, without further cross sectional view in its mechanical elements, while the internal part description has been completed, as well as that of the alternative shaft subsystems -A2- and -A3-.
In that case the up to now design symbols of the systems hydraulic fluid, are replaced by closed ducts so that from each cylinder head (21) the hydraulic fluid of each pump outlet (25) flows back into to central outlet duct (25a) that is guided to inlet (30) of (30a) of the H/E (26), drives the rotor and its shaft (28-27a) and from outlet (31) of the H/E via the central inlet duct (24a), the hydraulic fluid returns to each of the pumps inlets (24) for the re-feeding of the system aiming at full cycle, under closed circuit operation. As a symbolic energy source, the engine (M) depicted, provides power to the input shaft exit of the pump through the sliding coupling (X) that is directly coupled with the above mentioned engine. In the present state the operation of the *mechanically self-adjustable system of linear power transfer* of Figure -21- in its simplest configuration, has been completed, being suitable for many industrial applications.

### Automotive industry with energy recycling

The linear systems used in power transfer due to their specialized operation are the sole systems for converting one energy form to another, e.g. those of RES or of kinetic energy into electrical power. The kinetic energy always manifests itself in vehicular systems and is a result of the absence or the disruption of the previously existing dynamic energy. Identifying the kinetic energy and in order that is transformed into another form succeeds only **via** a linear system of power transfer, *even though the presence of such a system would be aiming **only** at the conversion of certain energy forms into electrical power.*

In order that the present CVT maybe used also as a system of converting various energy forms into electrical power, such as those of RES and the kinetic energy of a self-propelled vehicle, apart from the engines (M1) use for its operational requirements, is ideally suitable as a linear system that is fed with power via a hybrid coupling and a secondary energy source simultaneously with a main systems power source, as symbolically depicted in conjunction with engine (M2) Figures -22- and -24-. In this case it is equipped with a planetary mechanism with two inlets - one outlet supported by plate base (Q), whereas in each power inlet there is a single clutch (38) and (38a), so that each inlet shaft has a certain direction of rotation. Also due to is application change, being not any different from the CVT shown in fig. -24-, the inlet (30) of H/E (26), is replaced from the beginning by inlet (30a).
a) The configuration of engine (M1) as the essential power unit has as its input shaft (39a) together with planet (39), which through the satellites (41) and non rotating drum (N) as a result of a clutch (38) sets in rotation planet (40) which is embodied with shaft (6b) as the sole inlet to the pump.
b) The configuration of engine (M2) for power from secondary energy sources uses shaft (42a) as power input, bearing a bevel gear (42) directly coupled with the toothed bevel gear (43) which is embodied with the drum (N) of satellites (41), the drums rotational direction being regulated by the single clutch (38a). hence for every rotation of the shaft (42a) that sets in motion the drum (N), the engines (M2) power is added on to the pump shaft (6), together with the input power by engine (M1).

Having automotive industry as its goal the H/E (26) of the power transfer system shown in Fig.-22- has the final output shaft that is divided in two parts, consisting of a primary shaft (27b) and the secondary shaft (27c) the rotational direction of which is regulated by a single clutch (38b), *the configuration of which is simply illustrative.*
The particularity of the final power shaft of the H/E (26) aims at, on one hand to enable the system being coupled with the generator rotor, so as to convert the vehicles kinetic energy into electrical power, for a vehicle equipped with an independent differential mechanism, and on the other hand to enable the system to operate in accordance with its operational demands, or as a system of transferring power between an engine and a differential mechanism of a vehicle, without the intervention of a generator, or for the use in RES.
In the first case and circumferentially located on the primary shaft there is movable arm of sensor (E1) with its arm oppositely placed for the function of an electronic tachometer. The same is applied to the secondary final shaft (27c) with the sensors (E2) movable arm circumferentially placed on the secondary shaft while its stationary arm is oppositely placed to its movable arm. Furthermore the secondary final shaft (27c) is linked with one of the rotors (48) and while its other end (X) is linked with the input of the vehicle's differential mechanism.

### Idle Power and Generator out of Phase

In a constant operational condition of the system when the rotational speed of shafts (27b) and (27c) is identical, the generator remains out of phase, due to the fact that the sensor couples of the electronic tachometers (E1) and (E2) detect their relative rotational speed to one another as being zero. As a result of this rotor (48) does not resist the engine that provides power to the system, *since the generator turns in an idle condition.*

The presence of kinetic energy on the secondary shaft (27c) during the time interval that the dynamic energy is absent, act as an engine, resulting in accelerating the above mentioned shaft in its already acquired rotational direction in relation with deceleration in which shaft (27b) enters. Two couples of electronic tachometers (E2) and (E1) connected with processor (PL), when upon detecting relative rotational speed amongst the two shafts, the processor linearly short-circuits generator (G) and the kinetic energy (as the case may be) shall be converted to electrical power.
Regarding the reversal rotation of the final power shaft enabling the vehicle to move backwards, the outer circumference of the shaft (27c) head is configured with teeth (T) accompanied with sliding toothed linked (44), which being able to move via a fork (45) on the stationary guide (46) or via the use of an electromagnet, is coupled with toothed wheel (L) that belongs to the primary, so that both of the shafts are consolidated into a single shaft, while the operation of the single clutch ceases. In that case if through an operating button the flow of hydraulic fluid is reversed and guided from the pump's outlets (25) towards the outlet (31) of the H/E then its rotor (28) will be turning in the opposite direction.

### CVT employing two H/E

Referring to the initial invention description regarding a system of linear power transfer that incorporates more than one H/E, this linear pump (P1) is interconnected with the H/E (26R) and (26L) the output power of each H/E constituting also the driving shaft of each wheel of a vehicle. The present CVT also functions as a differential adaptor for the rotational speed of driving wheels (27R) and (27L), when the vehicle enters a turn without the use of a conventional differential mechanism, Fig. -23-, the operation of which is as follows:
The linear pump (P1) interconnected with H/E (26R) and (26L) as a coherent operational unit though the central outlet duct (25a) and of branches (30R) and (30L) drives the hydraulic fluid towards the H/E rotors, the shafts (27d) of which are though and though. From each though and though rotor shaft, a shaft (44d) passes through that is powered by the driving shaft (27d) via the use of a single clutch, hence the though and through shafts are converted into driving the wheels (27R-27L) Fig.-23-.
The hydraulic fluid of each outlet (31) of H/E flows towards the central return duct (24a) where it is being distributed to the cylinder heads inlets of the linear pump (P1) so as to repeat the operational cycle. The going though shaft (44d) behind the H/E (26L) denotes the waiting position, so as to enable each H/E to be coupled with the generator (G) rotor, as shown in the subsystem of the right wheel of the vehicle, Fig. -23-, so as to convert the kinetic energy into electrical power.

Since the hydraulic fluid is being distributed simultaneously via the central duct (25a) to both H/Es, when the vehicle enters a turn that demands a differential rotational speed amongst the two driving wheels, in the present system the deceleration of one of the two H/E causes the other's acceleration so the basic principle regarding differential transmission prevails: *the half sum of the two driving wheels' angular speeds (in the present case...of hydraulic engines), equals with a rotational speed of the carrier (in the present case... with the rotational speed of the linear pump), as an extension of the pump supplied hydraulic fluid to the H*/*Es.*

### CVT as applied in RES

When applied in RES such as wind energy or tidal power the hybrid CVT shown in Fig. -24-, through its output shaft (27a) of H/E (26) is in an idle state before being coupled with the generator (G) rotor which will be operating in constant angular speed. Stabilising the generator rotor's angular speed, which is provided with power form a linear system such as the present self-adjustable CVT, is achieved by altering its external load, either by an electronic or mechanical method.

In the fist case electronic tachometers (E1) and (E2) are employed in connection with a processor (PL) for the monitoring of angular speed of, on the one hand shaft (27a) of H/E that drives the rotor (48) of the generator (G), and on the other the shaft (6a) of the power input provided by the RES.
Due to the fact that wind energy is an unreliable source in contrast with the generator that requires constant rotational speed the couples of electronic sensors (E1) and (E2) continuously monitor the W/T angular speed as related with that of the exit shaft (27a) of the H/E. *Hence for every change in input power in the pump (P1), the processor (PL) regulates the electromotive force of the generator through a continuous adaptation of load -R- , so in this way its rotational speed is maintained constant.*

In the second case a mechanical sensor is used with an end result being a function of the system's torque. This is hydraulically pushed and placed within the inlet duct's (30a) interior of the liquid flow and, being movable, functions as a torque meter. It comprises a cylinder (Z) with a piston (J) ending at a rode (Jm) with a spring (23 a) with the rode's external end of cylinder (Z) being in idling mode. Regarding the change of position of the torque meter we have the following:
The commencing of the rotor turning of H/E or of the generator rotor (regardless of its resistance coefficient), is due to the fact that the hydraulic fluid pressure within the CVT network, and consequently the torque that the H/E rotor (28) acquires, it equated with the resistance torque of the generator. Such an equation is accomplished by the piston (J) travel via the backward movement of spring (22a) until any further spring compression ceases, where equation of pressure will be accomplished within every part of the interior of the network, causing turning torque to rotor (28), equal to the load torque of generator (G) that will start rotating, Fig. -24-.
Furthermore if at the end of rode (Jm) a moving pin on to a rheostat is applied that determines its electrical energy level, through the piston (J) travel, and because of the changes in input power, the generator' s (G) load will be self adjustable, retaining its constant speed.

### The System in Hybrid Coupling

The present self-adjustable CVT is ideally suitable for hybrid coupling, being simultaneously connected to different power inputs added to one another from similar or different energy sources ending at the power input (6b) of pump (P1). It is extremely useful when applied in RES *as symbolically depicted* in Fig. -24-, supported by a vertical pylon, the other end of which is securely anchored in the bottom of the sea, aiming at the coupling for simultaneous utilization of wind energy through a wind rotor (We) and underwater tidal currents through a hydro turbine (49).
By using planetary mechanism of two inlets and two outlets the wind rotor (We) in place of an engine (M1), provides power to input shaft (39a) passing through a single clutch (38), and by virtue of a planet (39), constitutes the first power input. The satellites (41) roll within the drum (N) to which the toothed bevel gear (43) is embodied and directly linked with bevel gear (42), which is part of the vertical shaft (42a), while the drum is being regulated by the single clutch (38b).
The submersed pylon part is equipped with a hydro turbine (49) functioning as an engine (M2) with shaft (42a) as the planetary mechanism's second power input. Each power input is added on to planet (40) and flows to the linear pump through a shaft (6a).

*Notice: the single clutches (38) and (38a) aim at when on of the two RES has a low energy level, then the system's torque will be activated so that the energy flow of the other source is channelled to the input (6b) of the linear pump.*

When power enters the system from the wind energy input (39a), the power flows towards planet (40), since it cannot turn drum (N) reversely, due to a single clutch (38). In case turbine (49) form tidal energy is also activated, Fig. -24-, the couple of the bevel gears (42-43) will drive the drum with its satellites (41), which in reference with planet (39) already set in motion, the power entering drum (N) via its satellites will function in an additive way, thus accelerating shaft (6b), a shaft that rotates the system's pump resulting in the increase of electrical power production.

## Claims

1. Self-adjustable continuously variable power transmission hydrostatic system equipped with a real time variable displacement pump, placed between an engine and a variable external load, a system which is applicable to industry, drilling, marine engineering, robotics or electrical power generation, whereby the hydrostatic system comprises one or more hydraulic engines (26) interconnected with a piston pump (P1) or an alternative one (P2) getting its power input through shaft (6) of rotor (A6) via hydraulic power ducts (25a) that, on one hand connects the pump oulets (25) with the hydraulic motor intake (30 or 30a), thus turning rotor (28) containing radially sliding vanes (29), and on the other hand of the duct (26a) which connects the outlet (31) of the hydraulic, piston or vane equipped, engine with the pump inlets (24), or via the coupling of a number of pumps with the engine or engines being in line or in parallel by using the hydraulic engine's (26) shaft (27) as power output, or shafts (27d), depending on the transportation system application, whereas for the conversion of the mechanical into electrical energy, such as the power generation from renewable energy sources, then it also contains a planetary mechanism of two inputs - one output (39a-42a; 40-6b), whereby each pump of the hydrostatic system uses one of the following shaft subsystems (A1, A2, A3), each one of which has a shaft (S) passing through a swinging disk (D) which has cylindrical radially arranged buttons (13) used to couple the rods (19-17), with circumferentially located cylinders (2) on dividable shell (1a-1b) by using ball bearings (14) located into carriers (15) in reference with the pump (P1) supports (20-20a), or with a shell (1c-1d) having a swinging case (D.1), with spherical buttons (13a) and rods (19.1-17.1) which are in reference with the pump (P2), whereby, due to the linear characteristics of those hydraulic pumps containing all of the above mentioned parts, under the influence of eccentrically placed centrifugal masses (W) on to heads (12) which are part of and balanced with the shaft (S) through a screw (b) with the use of a wedge (K) or the independently rotating from the shaft weights (W1 or W2), including their heads (12a or 12b) being interconnected with a couple of rotors (A6-B6; A6.1-B6.1; A6.2-B6.2) thus enabling shaft (S) to vary its position, hence generating a self-adjustable continuously variable system for power transfer, through the use of a linearly variable displacement pump, that, depending upon the field of application, functions independently of a hydraulic engine, such a system suitable to be used in automotive industry, incorporating a differential mechanism capable of energy recycling through a hybrid connection, the system comprising a planetary mechanism with two inputs and one output, i.e., a mechanism comprising an input shaft (39a) which passes through a single clutch (38), planetary gears (39-40), satellite gears (41), a drum (N) being controlled by a single clutch (38a), a bevel gear (43) securely fixed on the drum which is connected with gear (42) via a shaft (42a), as well as planetary gear (40) which is embodied with the input shaft (6b) of each pump, as the case may be, and by the fact that the power shaft (27b) of hydraulic engine (26) through the use of the single clutch (38b), is able to turn the final power shaft (27c); whereby the movable parts of a couple of electronic sensors (E1) and (E2) are circumferentially located on said power shafts (27b, 27c) with their stationary parts facing opposite one another, whereas through a processor (PL) the generator armament is activated, while the backward motion of the vehicle is accomplished by the movement of the toothed coupling gear (44) from a position "A" to a position "B" via a fork (45), or by using an electromagnet to engage power shafts (27c, 27d) with the wheel (L) and by hydraulic flow reversal towards the hydraulic engine (26), whereby, with regards to power transmission system which, devoid of a differential, it is capable of handling different rotational speeds between the vehicle driving wheels (27R-27L), and that each hydraulic engine has a through power shaft (27d) which by the use of a single clutch transfers its power to the shaft (44d) going through that shaft (27d) and constitutes the driving shaft of each coupled wheel and the generator (G) for the conversion of kinetic energy into electrical energy, similarly as with the wheel (27R), whereby, for electrical power generation the hybridically coupled power inputs (M1, M2) via the above mentioned Continuously Variable Transmission's (C.V.T.) inputs (39a-42a), the stabilization of the generator's (G) rotational speed is accomplished by using electronically coupled tachometers (E1, E2), which, one the one hand record the rotational speed of the hydraulic engine's (26) shaft (27a), and on the other, the rotational speed of the pump's input shaft (6a) and that the generator's electromotive force is regulated by the use of the processor (PL); whereby, in order to regulate the mechanical parameters of the generator (G), a duct (30a) is used having a cylinder (Z) with a piston (J) ending at a rod (Jm) having a compression spring (23a).

2. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), as well as for the use of a pump devoid of a hydraulic engine, circumferentially arranged cylinders (2) of each pump with the following shaft subsystems -A1-, -A2- and -A3- according to Claim -1-, that is **characterized by** the fact that it comprises rotors (A6-B6) arranged coaxially and opposite to each other, with their shafts (6) on to a couple of ball bearings (9) with each rotor on to each of the pump's (P1) dividable shell (1a-1b), or that of the pump's (P2) dividable shell (1c-1d), the front surfaces of each rotor bearing, on one hand the safety pins (8) or (8a) and the lateral safety pins (8b), and on the other hand the channels (7) in which rolling balls (V) carried by the heads (12) are used for the rolling of the radially coupled shaft (S) on to its rotors. By the fact that the shaft passing through the swinging disk (D) as in reference with the pump (P1), the precession of the above mentioned disk causing an orbital movement of the button (13) is gyroscopically achieved by the through and through ball bearing (14) motion within a case (15a) of carrier (15) with attached rods (17) bearing the pistons (19). With the carriers (15) coupled with the plate bases (20), the arc edge (20a) of which enter a channel (C) in each dividable shell (1a-1b) and are stabilized, while their pins (20b) are restricted in a shell cavity (11).

3. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), as well as for the use of a pump devoid of a hydraulic engine, circumferentially arranged cylinders (2) of each pump with the following shaft subsystems -A1-, -A2- and -A3- according to Claim 1 and Claim -2-, in which a shaft subsystem such as that with features such as those of -A2- is characterized is **characterized by** the fact that it comprises rotors (A6.1-B6.1) placed with their shafts (6) on to a couple of ball bearings (9) corresponding to each rotor in each dividable shell (1a-1b) of the pump (P1) or shell (1c-1d) of the pump (P2), with the front surface of each rotor having channels (7), in which ball bearings (V) roll, and with a shaft (S) passing through the ball bearings (9) carried on swinging disk (D) or (D.1), a shaft embodied with heads (12a). By the fact that in either side of the heads' front surface, the racks (35) are fixed, each one of which comes in contact with a toothed balancing pinion (34), the ends of which are embodied in the centrifugal weights (W1), and that each rotor has a through hole, via which, shaft (32) passes freely, a shaft which at each of its two ends embodies a balancing pinion (34), for every tendency of each balancing pin to change position due to the centrifugal force -F- produced by the rotating weights (W1) on the shafts (32) in unisom with the toothed balancing pins (34), there is a corresponding movement in relation to each rack (35).

4. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), as well as for the use of a pump devoid of a hydraulic engine, circumferentially arranged cylinders (2) of each pump with the following shaft subsystems -A1-, -A2- and -A3- according to Claim -1- and Claim -2-, in which a shaft subsystem with features such as those of -A3- is **characterized by** the fact that it comprises rotors (A6.2-B6.2) with their shafts (6) on to a couple of ball bearings (9) corresponding to each rotor in each dividable shell (1a-1b) or (1c-1d), whilst each of the front surfaces of the rotors have two through holes (12) via which, shafts (32) pass freely, both ends to which a gear (37) is embodied on either side of the rotors' front surfaces being permanently coupled with one another. By the fact that each gear (37) has a mechanical arm (Gb), the end of which carries a centrifugal weight (W2), while the rotors (A6.2) and (B6.2) on either side of the front surfaces have channels (7) in which the heads' (12b) ball bearings (V) roll, so as to achieve a rolling coupling of the shaft (S). By the fact that shaft (S) passes through the ball bearings (9) carried by the swinging disk (D) or (D.1), and being embodied with heads (12b), each of which is equipped with a couple of racks (35a) on either side of each front surface, attached eccentrically with respect to an imaginary vertical axis of symmetry facing in the opposite direction from the other head aiming at counterbalancing the shaft mechanism. Furthermore, by the fact that each rack (35a) is linked with one of the two coupled gears (37) and that for every change of power or load setting, the mechanical arms (Gb), under the centrifugal force -F- exerted by the weights (W2), according to the Watt's principle, and in reference to rotors (A6.2-B6.2), adjust the corresponding shaft position in direct relation to the coefficient of resistance of the hydraulic motor's (26) power shaft, thus regulating the pump flow.

5. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), as well as for the use of a pump devoid of a hydraulic engine, circumferentially arranged cylinders (2) of each pump with the following shaft subsystems -A1-, -A2- and -A3- according to Claim -1-, Claim -2-, Claim -3- and Claim -4- where each of the above mentioned shaft subsystems is **characterized by** the fact that the *generated centrifugal force due to the weights (W), (W1) or (W2) bring exerted as a unction of power and load* on to the radially coupled shaft (S) with the rotating rotors (A6-B6), (A6.1-B6.1) or (A6.2-B6.2), enabling the shaft position to be continuously variable, *constitutes the mechanical cause* that renders the present hydrostatic system of power transfer a linear one.

6. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), or having twice the number of hydraulic pumps connected in line or in parallel with one another via hydraulic power ducts (25a) and (26a), as well as with the following shaft subsystems -A1-, -A2- and -A3- as well as for the use of a pump devoid of a hydraulic engine, according to Claim -1-, and is **characterized by** the fact that the each of the shaft subsystem rotors (-B6, -B6.1 or -B6.2) set in motion as mentioned above, equipped with a support shaft including the mechanical elements (6a), such a rotor is transformed into a driving one allowing the in line coupling of two or more pumps, resulting thus into the doubling or the multiplication of the available hydraulic liquid per unit time towards the hydraulic engine (26), hence achieving a high speed hydrostatic system of linear power transfer.

7. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), as well as for the use of a pump devoid of a hydraulic engine, circumferentially arranged cylinders (2) of each pump with the following shaft subsystems -A1-, -A2- and -A3- according to Claim -1-, Claim -2-, Claim -3- and Claim -4-, where a shaft (S) being supported by dividable shell (1c-1d), as referred in hydraulic pump (P1), a shaft having a swinging disk (D.1) equipped with radially arranged buttons (13a), is **characterized by** the fact that the ends of the disk buttons are spherical, while each button drives a rod (17.1) linked with a piston, with either end of each rod having a corresponding spherical cavity used, on one hand with the disk's spherical button, and on the other, with the spherical link (19.1a) as part of each piston (19.1).

8. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), a system being used in automotive industry employing an independent differential gear mechanism capable of energy recycling via a hybrid coupling, as well as for the use of a pump devoid of a hydraulic engine, according to Claim -1-, and is **characterized by** the fact that by the movement of the toothed coupling gear (44) from position "A" to position "B" via a fork (45), or via an electromagnet used in the coupling of shafts (27c) and (27d) with the wheel (L), on one hand it consolidates the two free shafts into a single rigid output shaft by dispensing with the clutch (38b), so that the vehicle is capable of backward motion, and on the other, the permanent coupling of the two free shafts into a single rigid one, provides an alternative system application in any field.

9. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), a system being used in different or similar renewable energy sources by virtue of a hybrid coupling for electrical power generation in the same C.V.T., as well as for the use of a pump devoid of a hydraulic engine, according to Claim -1-, is **characterized by** the fact that, should the generator (G) parameters are mechanically regulated, then a duct (30a), with the cylinder (Z) and the piston (J) ending at a rod (Jm) equipped with compression spring (23a), is used, so that for every flow change from the pump (P1) to the engine (26) that fluctuates the network pressure, there is a corresponding change in piston (J) travel, with its sliding rod (Jm) end on to an external rheostat, regulating thus the generator's armament.

10. Self-adjustable continuously variable power transmission system equipped with a real time variable displacement pump, placed between an engine and a variable external load, a system which is applicable to industry, drilling, marine engineering, robotics or electrical power generation, that consists of a piston pump (P1) or an alternative one (P2) interconnected with hydraulic engines (26), a system being either in automotive industry or in different or similar renewable energy sources, by virtue of a hybrid coupling, as well as for the use of a pump devoid of a hydraulic engine, according to Claim -1-, and is **characterized by** the fact that should the generator (G) parameters are electronically regulated, then the movable parts of a couple of electronic sensors (E1) and (E2) are circumferentially located on shafts (27b) and (27c) or on shafts (6b) and (27a) respectively, with their stationary parts facing opposite one another, for the purpose of comparing the relative angular speed of each one of the shafts, while the armament of each generator is activated through the use of a processor (PL).

## Patentansprüche

1. Selbsteinstellendes hydrostatisches System mit kontinuierlich variabler Kraftübertragung, ausgestattet mit einer Echtzeit-Verstellpumpe, die zwischen einem Motor und einer variablen externen Last platziert ist, ein System, das für Industrie, Bohrtechnik, Schiffstechnik, Robotik oder elektrische Energieerzeugung anwendbar ist, wobei das hydrostatische System einen oder mehrere mit einer Kolbenpumpe (P1) verbundene Hydraulikmotoren (26) aufweist oder eine alternative (P2) über hydraulische Kraftkanäle (25a) durch die Welle (6) des Rotors (A6) einerseits die Pumpenauslässe (25) mit dem Hydromotoreinlass (30 oder 30a)verbindet und andererseits den Rotor (28) mit radial beweglichen Schaufeln (29) dreht und andererseits die Leitung (26a) 31) des mit einem Hydraulikkolben oder Flügelrad ausgestatteten Motors mit den Pumpeneinlässen (24) oder über die Kopplung einer Anzahl von Pumpen, wobei der Motor oder die Motoren unter Verwendung der Welle (27) des Hydraulikmotors (26) in Reihe oder parallel geschaltet sind, als Leistung, abhängig von der Anwendung des Transportsystems, während für die Umwandlung der mechanischen in elektrische Energie, wie beispielsweise die Stromerzeugung aus erneuerbaren Energiequellen, dann auch ein Planetenmechanismus mit zwei Eingängen - ein Ausgang (39a -42a). Wobei jede Pumpe des hydrostatischen Systems eines der folgenden Wellensubsysteme (A1, A2, A3) verwendet, von denen jede eine Welle (S) aufweist, die durch eine Schwenkscheibe (D) hindurchgeht, die zylindrische, radial angeordnete Knöpfe (13) aufweist um die Stangen (19-17) mit in Umfangsrichtung angeordneten Zylindern (2) auf der teilbaren Schale (1a-1b) unter Verwendung von in Trägern (15) angeordneten Kugellagern (14) in Bezug auf die Pumpen-(P1) -Träger (20- 20a) oder mit einer Schaufel (1c-1d) mit einem Schwenkgehäuse (D.1) mit der Pumpe (P2) beaufschlagten Kugelknöpfen (13a) und Stäben (19.1-17.1), wobei aufgrund der lineare Charakteristiken jener Hydraulikpumpen, die alle oben genannten Teile enthalten, unter dem Einfluß der exzentrisch angeordneten Zentrifugalmassen (W) auf Köpfe (12), die durch eine Schraube (b) mit der Welle (S) unter Verwendung eines Keils (K) oder der unabhängig von den Wellengewichten (W1 oder W2), einschließlich ihrer Köpfe (12a oder 12b), die mit zwei Rotoren (A6-B6, A6.1-B6.1 oder A6.2-B6.2) verbunden sind, so dass die Welle (S) ihre Position ändern und somit erzeugen kann ein selbstverstellbares, stufenlos verstellbares System zur Kraftübertragung durch die Verwendung einer linear verstellbaren Verdrängerpumpe, die je nach Anwendungsgebiet unabhängig von einem Hydraulikmotor arbeitet, ein solches System, das für die Automobilindustrie geeignet ist der durch eine Hybridverbindung in der Lage ist, eine Energierecyclingvorrichtung durchzuführen, wobei das System einen Planetenmechanismus mit zwei Eingängen und einem Ausgang aufweist, bspw einen Mechanismus mit einer Eingangswelle (39a), die durch eine einzige Kupplung (38) hindurchgeht, Planetenräder (39- 40), eine Sattelzahnräder (41), wobei eine Trommel (N) durch eine einzige Kupplung (38a) gesteuert wird, wobei ein Kegelrad (43) sicher an der Trommel befestigt ist, die über eine Welle (42a) mit dem Zahnrad (42) verbunden ist, sowie ein Planetengetriebe (40), das mit der Eingangswelle (6b) jeder Pumpe ausgebildet ist und durch die Tatsache, dass die Kraftwelle (27b) des Hydraulikmotors (26) durch die Verwendung der eine einzige Kupplung (38b) ist in der Lage, die endgültige Antriebswelle (27c). Wobei die beweglichen Teile von einigen elektronischen Sensoren (E1) und (E2) in Umfangsrichtung auf den Kraftwellen (27b, 27c) angeordnet sind, wobei ihre stationären Teile einander gegenüberliegen, während durch einen Prozessor (PL) die Generatorwaffe ist aktiviert wird, während die Rückwärtsbewegung des Fahrzeugs durch die Bewegung des Zahnkupplungszahnrades (44) von einer Position "A" zu einer Position "B" über eine Gabel (45) oder durch Verwendung eines Elektromagneten zum Einrasten von Kraftwellen erfolgt (27c, 27d) mit dem Rad (L) und durch hydraulische Strömungsumkehr in Richtung des Hydromotors (26), wobei in Bezug auf ein Kraftübertragungssystem, das ohne Differential unterschiedlich ist, unterschiedliche Drehzahlen zwischen dem Fahrzeug fahren kann Räder (27R-27L), und daß jeder Hydraulikmotor eine Durchgangsleistungswelle (27d) aufweist, die durch die Verwendung einer einzigen Kupplung ihre Kraft auf die durch diese Welle (27d) gehende Welle (44d) überträgt und die Antriebswelle jedes gekoppelten Rades und des Generators (G) für die Umwandlung von kinetischer Energie in elektrische Energie, ähnlich wie beim Rad (27R). Wobei für die elektrische Energieerzeugung die hybridisch gekoppelten Leistungseingänge (M1, M2) über die oben erwähnten kontinuierlichen variablen Getriebe (CVT) Eingänge (39a-42a) die Stabilisierung der Drehzahl des Generators (G) durch Verwendung elektronisch gekoppelter Tachometer erreicht wird (E1, E2), die einerseits die Drehzahl der Welle (27a) des Hydraulikmotors (27a) und andererseits die Drehzahl der Antriebswelle der Pumpe (6a) und die elektromotorische Kraft des Generators aufzeichnen durch die Verwendung des Prozessors (PL) geregelt wird, wobei zur Regelung der mechanischen Parameter des Generators (G) ein Kanal (30a) mit einem Zylinder (Z) mit einem an einer Stange endenden Kolben (J) verwendet wird (Jm) mit einer Druckfeder (23a)

2. Selbstverstellbares, kontinuierlich variables Kraftübertragungssystem mit einer Echtzeit variablen Verdrängerpumpe, die zwischen einem Motor und einer variablen Außenbelastung angeordnet ist, ein System, das für Industrie, Bohren, Schiffsbau, Robotik oder Stromerzeugung anwendbar ist einer Kolbenpumpe (P1) oder einer alternativen (P2), die mit Hydraulikmotoren (26) verbunden sind, sowie für die Verwendung einer Pumpe ohne Hydraulikmotoren in Umfangsrichtung angeordneten Zylindern (2) jeder Pumpe mit der folgenden Welle Subsysteme -A1-, -A2- und -A3- nach Anspruch -1-, **dadurch gekennzeichnet, dass** es Rotoren (A6-B6) aufweist, die koaxial und einander gegenüberliegend angeordnet sind, wobei ihre Wellen (6) auf ein paar Kugellager (9) mit jedem Rotor auf jede der teilbaren Schalen (1a-1b) der Pumpe (P1) oder die der (P2) teilbaren Schale (1c-1d), die Stirnflächen jedes Rotors Lagerung einerseits die Sicherheitsnadeln (8) oder (8a) und die seitliche Sicherheit Stifte (8b) und andererseits die Kanäle (7), in denen von den Köpfen (12) getragene Wälzkugeln (V) zum Walzen der radial gekoppelten Welle (S) zu ihren Rotoren verwendet werden. Durch die Tatsache, dass die Welle, die durch die Schwenkscheibe (D) in Bezug auf die Pumpe (P1) hindurchgeht, die Präzession der oben erwähnten Scheibe, die eine Orbitalbewegung des Knopfes (13) bewirkt, durch die Durchgangs- und Durchgangskugel gyroskopisch erreicht wird, (14) Bewegung innerhalb eines Gehäuses (15a) des Trägers (15) mit befestigten Stangen (17), die die Kolben (19) tragen. Wobei die Trägerplatten (15) mit den Plattenböden (20) gekoppelt sind, deren Bogenkante (20a) in jede teilbare Schale (1a-1b) in einen Kanal (C) eintritt und stabilisiert wird, während ihre Stifte (20b) beschränkt sind in einem Schalenhohlraum (11).

3. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2) sowie für die Verwendung einer Pumpe ohne Hydraulikmotoren in Umfangsrichtung angeordneten Zylindern (2) jeder Pumpe mit folgenden Wellensubsystemen - A1-, -A2- und -A3- nach Anspruch 1 und Anspruch -2-, bei denen ein Wellen-Subsystem, wie dasjenige mit Merkmalen wie denen von -A2- charakterisiert ist, **dadurch gekennzeichnet ist, dass** es Rotoren (A6 (1a-1b) der Pumpe (P1) oder Schale (1c-1d) mit ihren Schächten (6) auf ein paar Kugellager (9), die jedem Rotor entsprechen, der Pumpe (P2), wobei die Vorderseite jedes Rotors Kanäle (7) aufweist, i wobei die Kugellager (V) durch die an den Schwenkscheiben (D) oder (D.1) getragenen Kugellager (S) eine mit den Köpfen (12a) ausgebildete Welle (S) durchlaufen. Durch die Tatsache, daß in beiden Seiten der vorderen Fläche der Köpfe die Zahnstangen (35) befestigt sind, von denen jede mit einem gezahnten Ausgleichsritzel (34) in Berührung kommt, dessen Enden in den Zentrifugalgewichten (W1) ausgebildet sind und daß jeder Rotor ein Durchgangsloch aufweist, über welches die Welle (32) frei hindurchgeht, eine Welle, die an jedem ihrer beiden Enden ein Ausgleichsritzel (34) aufweist, wobei jede Tendenz jedes Ausgleichsstiftes durch die Positionierung des Ausgleichsstifts verläuft die durch die rotierenden Gewichte (W1) auf den Wellen (32) im Unisom mit den gezahnten Ausgleichsstiften (34) erzeugten Zentrifugalkraft - F-, eine entsprechende Bewegung in Bezug auf jede Zahnstange (35) aufweist.

4. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2) sowie für die Verwendung einer Pumpe ohne Hydraulikmotoren in Umfangsrichtung angeordneten Zylindern (2) jeder Pumpe mit folgenden Wellensubsystemen - A1-, -A2- und -A3- nach Anspruch -1- und Anspruch -2-, bei denen ein Wellen-Subsystem mit Merkmalen wie denen von -A3- **dadurch gekennzeichnet ist, dass** es Rotoren (A6.2- B6.2) mit ihren Wellen (6) auf ein paar Kugellager (9) entsprechend jedem Rotor in jeder teilbaren Schale (1a-1b) oder (1c-1d), wobei jede der Vorderseiten der Rotoren aufweist zwei Durchgangslöcher (12), über die Wellen (32) frei laufen, beide Enden, auf die ein Gea r (37) auf jeder Seite der vorderen Flächen der Rotoren ausgebildet ist, die permanent miteinander gekoppelt sind. Durch die Tatsache, dass jedes Zahnrad (37) einen mechanischen Arm (Gb) aufweist, dessen Ende ein Fliehgewichtsgewicht (W2) trägt, während die Rotoren (A6.2) und (B6.2) auf beiden Seiten der Vorderflächen sind Kanäle (7) aufweisen, in denen die Kugellager (Vb) der Köpfe (12b) rollen, um eine Rollkupplung der Welle (S) zu erreichen. Durch die Tatsache, dass die Welle (S) durch die von der Schwenkscheibe (D) oder (D.1) getragenen Kugellager (9) hindurchgeht und mit Köpfen (12b) ausgebildet ist, die jeweils mit mehreren Zahnstangen ausgestattet sind (35a) auf jeder Seite jeder Vorderfläche, die exzentrisch in Bezug auf eine imaginäre vertikale Symmetrieachse angebracht ist, die in die entgegengesetzte Richtung von dem anderen Kopf gerichtet ist, um den Wellenmechanismus auszugleichen. Weiterhin ist durch die Tatsache, daß jede Zahnstange (35a) mit einem der beiden gekoppelten Zahnräder (37) verbunden ist und daß für jede Änderung der Kraft- oder Lasteinstellung die mechanischen Arme (Gb) unter der Zentrifugalkraft -F- ausgeübt werden die Gewichte (W2) nach dem Wattschen Prinzip und in Bezug auf Rotoren (A6.2-B6.2) die entsprechende Wellenposition in direktem Verhältnis zum Widerstandskoeffizienten der Kraftwelle des Hydraulikmotors (26) einstellen, wodurch der Pumpenstrom geregelt wird.

5. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2) sowie für die Verwendung einer Pumpe ohne Hydraulikmotoren in Umfangsrichtung angeordneten Zylindern (2) jeder Pumpe mit folgenden Wellensubsystemen - A1-, -A2- und -A3- nach Anspruch -1-, Anspruch -2-, Anspruch -3- und Anspruch -4-, wobei jedes der oben erwähnten Wellen-Subsysteme **dadurch gekennzeichnet ist, daß** *die erzeugte Zentrifugalkraft fällig ist wobei die Gewichte (W), (W1) oder (W2) als Funktion der Kraft und Last* auf die radial gekoppelte Welle (S) mit den rotierenden Rotoren (A6-B6) ausgeübt werden, (A6.1-B6.1) oder (A6.2-B6.2), so dass die Wellenposition stufenlos variabel ist, *bildet die mechanische Ursache,* die das gegenwärtige hydrostatische System der Kraftübertragung linear macht.

6. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist eine Kolbenpumpe (P1) oder eine mit Hydraulikmotoren (26) verbundene Alternative (P2) oder mit der doppelten Anzahl von parallel oder parallel zueinander über Hydraulikkraftkanäle (25a) und (26a) verbundenen Hydraulikpumpen ebenso wie bei den folgenden Wellen-Subsystemen -A1-, -A2- und -A3- sowie für die Verwendung einer Pumpe ohne Hydraulikmotor nach Anspruch -1- und **dadurch gekennzeichnet**, wobei die Wellen-Teilsystem-Rotoren (-B6, -B6.1 oder -B6.2) wie oben erwähnt in Bewegung gesetzt sind und mit einer Stützwelle versehen sind, die die mechanischen Elemente (6a), wird ein solcher Rotor in einen Fahren umgewandelt, der die Inline-Kopplung von zwei oder mehr Pumpen ermöglicht, was zu einer Verdoppelung oder Vervielfachung der verfügbaren Hydraulikflüssigkeit pro Zeiteinheit zum Hydraulikmotor (26) führt und somit eine Hochgeschwindigkeits-Hydrostatische erreicht System der linearen Kraftübertragung.

7. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2) sowie für die Verwendung einer Pumpe ohne Hydraulikmotoren in Umfangsrichtung angeordneten Zylindern (2) jeder Pumpe mit folgenden Wellensubsystemen - A1-, -A2- und -A3- nach Anspruch -1-, Anspruch -2-, Anspruch -3- und Anspruch -4-, wobei eine Welle (S) durch eine teilbare Schale (1c-1d) abgestützt ist (P1), eine Welle mit einer mit radial angeordneten Knöpfen (13a) versehenen Schwenkscheibe (D.1), **dadurch gekennzeichnet, daß** die Enden der Lamellentasten sphärisch sind, während jeder Knopf eine Stange (17.1), die mit einem Kolben verbunden sind, wobei jedes Ende jeder Stange eine entsprechende s aufweist Pherical Hohlraum, einerseits mit dem sphärischen Knopf der Scheibe und andererseits mit dem sphärischen Glied (19.1a) als Teil jedes Kolbens (19.1).

8. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2), wobei ein System in der Automobilindustrie eingesetzt wird, wobei ein unabhängiges Differentialgetriebe verwendet wird, das über eine Hybridkopplung zum Energierecycling fähig ist, sowie für die Verwendung von Pumpe ohne Hydraulikmotor nach Anspruch -1- und zeichnet sich dadurch aus, dass durch die Bewegung des Zahnkupplungszahnrades (44) von der Position "A" in die Position "B" über eine Gabel (45) oder über einen Elektromagneten, der bei der Kopplung von Wellen (27c) und (27d) mit dem Rad (L) verwendet wird, einerseits die beiden freien Wellen durch eine Verzögerung der Kupplung (38b) zu einer einzigen starren Abtriebswelle verfestigt, so daß die fahrzeug Cle ist in der Lage, Rückwärtsbewegungen, und auf der anderen Seite, die permanente Kopplung der beiden freien Wellen zu einem einzigen starren, bietet eine alternative Systemanwendung in jedem Bereich.

9. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2), wobei ein System in verschiedenen oder ähnlichen erneuerbaren Energiequellen durch eine Hybridkopplung zur Stromerzeugung im gleichen CVT sowie für die Verwendung einer Pumpe ohne Hydraulikmotor nach Anspruch -1- ist **dadurch gekennzeichnet, daß** bei einem mechanisch geregelten Generator (G) Parameter ein Kanal (30a) mit dem Zylinder (Z) und dem Zylinder (Z) wird der Kolben (J), der an einer mit Druckfeder (23a) ausgestatteten Stange (Jm) endet, verwendet, so dass für jeden von der Pumpe (P1) zum Motor (26) schwankenden Strömungswechsel der Netzdruck herrscht entsprechende Änderung im Kolben (J) reisen, mit seiner Gleitstange (Jm) enden an einem externen Rheostat, Regulierung so die Rüstung des Generators.

10. Selbstverstellbares, kontinuierlich variables Kraftübertragungssystem mit einer Echtzeit verstellbaren Verdrängerpumpe, die zwischen einem Motor und einer variablen Außenbelastung angeordnet ist, ein System, das für Industrie, Bohren, Schiffsbau, Robotik oder Stromerzeugung anwendbar ist Kolbenpumpe (P1) oder eine mit Hydraulikmotoren (26) verbundene Alternative (P2), wobei ein System entweder in der Automobilindustrie oder in verschiedenen oder ähnlichen erneuerbaren Energiequellen, durch eine Hybridkopplung, sowie für die Verwendung von eine Pumpe ohne Hydraulikmotor nach Anspruch -1- und zeichnet sich dadurch aus, dass bei der elektronischen Regelung der Generator (G) -Parameter die beweglichen Teile einiger elektronischer Sensoren (E1) und (E2) in Umfangsrichtung auf Wellen (27b) und (27c) oder auf Wellen (6b) bzw. (27a) mit ihren einander gegenüberliegenden stationären Teilen angeordnet sind, um die relative Winkelgeschwindigkeit von jede
der Wellen, während die Bewaffnung jedes Generators durch die Verwendung eines Prozessors (PL) aktiviert wird.

## Revendications

1. Le système hydrostatique de transmission de puissance constamment variable auto-réglable équipé d'une pompe à cylindrée variable en temps réel, est placée entre un moteur et une charge externe variable. Ce système est applicable à l'industrie, au forage, au génie maritime, à la robotique ou à la production d'énergie électrique selon lequel le système hydrostatique comprend un ou plusieurs moteurs (26) interconnectés avec une pompe à piston (P1) ou une alternative (P2) apportant son entrée de puissance à travers de l'arbre (6) du rotor (A6) par des conduits de puissance hydraulique (25a). D'une part, le conduit relie les sorties de la pompe (25) à l'entrée du moteur hydraulique (30 ou 30a), tournant ainsi le rotor (28) et contenant radialement des aubes coulissantes (29). D'autre part, le conduit relie la sortie (31) du piston hydraulique ou le moteur équipé d'une aube aux entrées de la pompe (24), ou par le couplage d'un nombre de pompes au moteur ou aux moteurs étant en ligne ou en parallèle utilisant l'arbre du moteur (26) hydraulique comme une sortie de puissance. En outre, il relie la sortie aux arbres (27d), selon l'application du système de transport, alors que pour la conversion de l'énergie mécanique en énergie électrique, comme la génération d'énergie à partir de sources d'énergie renouvelables. Puis il contient également un mécanisme planétaire de deux entrées-une sortie (39a-42a). Chaque pompe du système hydrostatique utilise l'un des sous-systèmes d'arbre suivants (A1, A2, A3) dont chacun a un arbre (S) traversant un disque oscillant (D). Le disque comporte des boutons cylindriques (13) disposés radialement utilisés pour coupler les tiges (19-17) avec des cylindres situés de manière circonférentielle (2) sur une coquille divisible (1a-1b) en utilisant des roulements à billes (14) situés dans les carriers (15) en référence aux soutiens (20-20a) de la pompe (P1) ou à une coquille (1c-1d) ayant un boitier oscillant (D.1), avec des boutons sphériques (13a) et des tiges (19.1-17.1) qui sont en référence à la pompe (P2). En raison des caractéristiques linéaires de ces pompes hydrauliques contenant toutes les parts mentionnées ci-dessus, sous l'influence des masses centrifuges (W) excentrées sur les têtes (12) qui font partie et sont équilibrées de l'arbre (S) à travers d'une vis (b) à l'aide d'un cale (K) ou de la rotation indépendante des poids de l'arbre (W1 ou W2), y compris leurs têtes (12a ou 12b) étant interconnectés avec un couple de rotors (A6-B6, A6.1-B6.1 ou A6.2-B6.2), l'arbre peut changer sa position. De cette façon, un système auto-réglable à variation continue s'est créé pour le transfert de puissance, par l'utilisation d'une pompe à cylindrée linéairement variable, qui, selon le champ d'application, fonctionne indépendamment d'un moteur hydraulique, comme un système approprié dans l'industrie automobile, incorporant un mécanisme différentiel capable de recycler l'énergie par une connexion hybride. Le système comprend un mécanisme planétaire avec deux entrées et une sortie, c'est-à-dire: Un mécanisme comprenant un arbre d'entrée (39a) qui traverse un seul embrayage (38), des engrenages planétaires (39-40), des engrenages satellites (41), un tambour (N) étant contrôlé par un seul embrayage (38a), un engrenage conique (43) fixé solidement sur le tambour qui est relié à l'engrenage (42) par un arbre (42a), ainsi qu'un engrenage planétaire (40) qui est incarné avec l'arbre d'entrée (6b) de chaque pompe, selon le cas et le fait que l'arbre de puissance (27b) du moteur hydraulique (26) par l'utilisation de l'embrayage seul (38b), peut tourner l'arbre de puissance final (27c). Dans ce cas, les parties mobiles d'un couple de capteurs électroniques (E1) et (E2) sont situées de manière circonférentielle sur lesdits arbres de puissance (27b, 27c) avec leurs parts stationnaires en vis-à-vis, tandis que l'armement du générateur est activé par un processeur (PL). La motion rétrograde du véhicule est atteinte par un mouvement de l'engrenage de couplage denté (44) d'une position « A » a une position « B » par une fourche (45), ou en utilisant un électroaimant pour engager des arbres de puissance (27c, 27d) avec la roue (L) et par un renversement du flux hydraulique vers le moteur hydraulique (26), par rapport au système de transmission de puissance qui, dépourvu d'un différentiel, est capable de manipuler des vitesses de rotation différentes entre les roues motrices du véhicule (27R-27L). En outre, chaque moteur hydraulique a un arbre traversant (27d) qui, par l'utilisation d'un seul embrayage, transfère sa puissance à l'arbre (44d) traversant cet arbre (27d) et constitue l'arbre de conduite de chaque arbre couplé et le générateur (G) pour la conversion de l'énergie cinétique en énergie électrique, comme avec la roue (27R). Par conséquent, pour la production d'énergie électrique, les entrées de puissance couplées de manière hybride (M1, M2) par les entrées (39a-42a) de la transmission à variation continue (C.V.T) mentionnée ci-dessus, accomplissent la stabilisation de la vitesse de rotation du générateur (G), en utilisant des tachymètres couplés électroniquement (E1, E2), qui, d'une part, ils enregistrent la vitesse de rotation de l'arbre (27a) du moteur hydraulique (26) et d'autre part, ils enregistrent la vitesse de rotation de l'arbre d'entrée de la pompe(6a) et en outre, la force électromotrice du générateur est régulée par l'utilisation du processeur (PL) par lequel, afin de réguler les paramètres mécaniques du générateur (G), une tige (30a) est utilisée comportant un cylindre (Z) avec un piston (J), se terminant par une tige (Jm) et ayant une compression de source (23a).

2. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique, qui se compose d'une pompe à piston (P1) ou une alternative (P2) interconnectée avec des moteurs hydrauliques (26), ainsi que pour l'utilisation d'une pompe dépourvue d'un moteur hydraulique, des cylindres disposés de manière circonférentielle (2) de chaque pompe avec les sous-systèmes d'arbre suivants -A1-, -A2- et -A3- selon la déclaration -1-, **caractérisée par le fait qu'**il comprend des rotors (A6-B6) disposés coaxialement et en vis-à-vis l'un de l'autre, avec leurs arbres (6) sur deux roulements à billes (9) avec chaque rotor sur chacune des coquilles (1a-1b) divisibles de la pompe (P1) ou de la coquille (1c-1d) divisible de la pompe (P2), les surfaces antérieures de chaque palier de rotor, d'une part, les broches de sécurité (8) ou (8a) et les goupilles de sécurité latérales (8b) et, d'autre part, des canaux (7) dans lesquels, les billes de roulement (V) portées par les têtes (12) sont utilisées pour le roulement de l'arbre (S) couplé radialement à ses rotors. **Par le fait que** l'arbre traversant le disque oscillant (D) comme en référence à la pompe (P1), la précession du disque mentionné ci-dessus provoquant un mouvement orbital du bouton (13) est réalisée de manière gyroscopique par le motion du roulement à billes (14) dans un boitier (15a) du carrier (15) avec des tiges attachées (17) portant les pistons (19). Avec les carriers (15) couplés aux bases de plaque (20), dont le bord d'arc (20a) entre dans un canal (C), dans chaque coquille divisible (1a-1b) et sont stabilisés, tandis que leurs broches (20b) sont limités dans une cavité de coquille (11).

3. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique, qui se compose d'une pompe à piston (P1) ou une alternative (P2) interconnectée avec des moteurs hydrauliques (26), ainsi que pour l'utilisation d'une pompe dépourvue d'un moteur hydraulique, des cylindres disposés de manière circonférentielle (2) de chaque pompe avec les sous-systèmes d'arbre suivants -A1-, -A2- et -A3- selon la déclaration -1- et -2-, dans lesquels un sous-système d'arbre, avec les caractéristiques de -A2-, est **caractérisé par le fait qu'**il comprend des rotors (A6.1-B6.1) placés avec leurs arbres (6) sur le couple de roulements à billes (9) correspondant à chaque rotor dans chaque coquille divisible (1a-1b) de la pompe (P1) ou de la coquille (1c-1d) de la pompe (P2). La surface antérieure de chaque rotor a des canaux (7) dans lesquels les roulements à billes (V) roulent, et avec un arbre (S) traversant les roulements à billes (9) sur un disque oscillant (D) ou (D.1), un arbre en forme de têtes (12a). **Par le fait que**, dans le chaque part de la surface antérieure des têtes, les supports (35) sont fixés, chacun d'eux entre en contact avec un pignon d'équilibrage denté (34) dont les extrémités sont réalisées dans les poids centrifuges (W1), et chaque rotor possède un trou débouchant, par lequel, l'arbre (32) passe librement. Un arbre, qui, à chacune de ses deux extrémités, comporte un pignon d'équilibrage (34) pour chaque tendance de chaque broche d'équilibrage à changer de position en raison de la force centrifuge -F- produite par les poids rotatifs (W1) sur les arbres (32) en unisson avec les broches d'équilibrage dentés (34), il y a un mouvement correspondant par rapport à chaque crémaillère (35).

4. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique qui comprend une pompe à piston (P1) ou une alternative (P2) interconnectée avec des moteurs hydrauliques (26), ainsi que pour l'utilisation d'une pompe dépourvue d'un moteur hydraulique, des cylindres disposés de manière circonférentielle (2) de chaque pompe avec les sous-systèmes d'arbre suivants -A1-, -A2- et -A3- selon la déclaration -1- et -2-, dans lesquels un sous-système d'arbre, avec des caractéristiques de -A3- , est **caractérisé par le fait qu'**il comprend des rotors (A6.2-B6.2) avec leurs arbres (6) sur un couple de roulements à billes (9) correspondant à chaque rotor dans chaque coquille (1a-1b) ou (1c-1d), tandis que chacune des surfaces antérieures des rotors ont deux trous (12) par lesquels les arbres (32) passent librement, les deux extrémités auxquelles un engrenage (37) est incarnée à un ou l'autre côté des surfaces antérieures étant couplées en permanence l'une à l'autre. Chaque engrenage (37) possède un bras mécanique (Gb), dont l'extrémité porte un poids centrifuge (W2), tandis que les rotors (A6.2) et (B6.2) ont des canaux aux toutes les surfaces antérieures (7) dans lesquels les roulements à billes (V) des têtes (12b) roulent, de manière à obtenir un couplage de roulement de l'arbre (S). L'arbre (S) traverse les roulements à billes (9) portés par le disque oscillant (D) ou (D.1), et étant incarnés avec des têtes (12b), dont chacun est équipé de plusieurs supports (35a) aux toutes les surfaces antérieures, attachées excentriquement par rapport à un axe de symétrie imaginaire vertical tourné dans la direction opposée par rapport à l'autre tête en vue de contrebalancer le mécanisme de l'arbre. En outre, chaque support (35a) est relié à l'un des deux engrenages couplés (37) et pour chaque changement de puissance ou de charge, les bras mécaniques (Gb), sous la force centrifuge -F- exercée par les poids (W2), selon le principe du Watt, et en référence aux rotors (A6.2-B6.2), règle la position d'arbre correspondante en relation directe avec le coefficient de résistance de l'arbre de puissance hydraulique (26), régulant ainsi le débit de la pompe.

5. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique qui comprend une pompe à piston (P1) ou une alternative (P2) interconnectée avec des moteurs hydrauliques (26), ainsi que pour l'utilisation d'une pompe dépourvue d'un moteur hydraulique, des cylindres disposés de manière circonférentielle (2) de chaque pompe avec les sous-systèmes d'arbre suivants -A1-, -A2- et -A3- selon la déclaration -1- et -2-,-3-,-4 où chacun des sous-systèmes d'arbres mentionnés ci-dessus, est **caractérisé par le fait que** *la force centrifuge générée en raison des poids (W), (W1) ou (W2) étant exercée en fonction de la puissance et de la charge* sur l'arbre couplé radialement (S) avec les rotors rotatifs (A6-B6), (A6.1-B6.1) ou (A6.2-B6.2), permettant à la position de l'arbre d'être variable en continu, constitue la cause mécanique qui rend le système hydrostatique actuel du transfert de puissance linéaire.

6. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique qui comprend une pompe à piston (P1) ou une alternative (P2) interconnectée avec des moteurs hydrauliques (26), ou ayant deux fois, le nombre de pompes hydrauliques connectées en ligne ou en parallèle entre elles par des conduits de puissance hydraulique (25a) et (26a), ainsi que par les sous-systèmes d'arbre suivants -A1-, - A2- et -A3- ainsi que pour l'utilisation d'une pompe dépourvue d'un moteur hydraulique selon la déclaration 1, et est **caractérisée par le fait que** chacun des rotors de sous-systèmes d'arbre (B6, B6.1 ou B6.2). La pompe est mis en mouvement comme mentionné ci-dessus, équipée d'un arbre de support comprenant les éléments mécaniques (6a), comme un rotor s'est transformé en un moteur qui permet le couplage en ligne des deux ou plusieurs pompes, résultant ainsi du doublement ou de la multiplication de liquide hydraulique disponible par unité de temps vers le moteur hydraulique (26), ce qui permet d'obtenir un système hydrostatique à grande vitesse de transfert de puissance linéaire.

7. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie électrique qui comprend une pompe à piston (P1) ou une alternative (P2) interconnectée avec des moteurs hydrauliques (26), ainsi que pour l'utilisation d'une pompe dépourvue d'un moteur hydraulique, des cylindres disposés de manière circonférentielle (2) de chaque pompe avec les sous-systèmes d'arbre suivants -A1-, -A2- et -A3- selon la déclaration -1-, -2-, -3-, -4-, où l'arbre (S) étant supporté par une coquille divisible (1c-1d), comme indiqué dans la pompe hydraulique (P1), un arbre ayant un disque oscillant (D.1) équipé de boutons disposés radialement (13a), est **caractérisé par le fait que** les extrémités des boutons de disque sont sphériques, tandis que chaque bouton entraîne une tige (17.1) reliée à un piston, avec chaque extrémité de chaque tige ayant une cavité sphérique correspondante utilisée, d'une part avec le bouton sphérique du disque, et d'autre part, avec la liaison sphérique (19.1a) dans le cadre de chaque piston (19.1).

8. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie, qui comprend une pompe à piston (P1) où une alternative (P2) interconnectée avec des moteurs hydrauliques (26) et un système utilisé dans l'industrie automobile en utilisant un mécanisme aux engrenages différentiel indépendant, capable de recycler l'énergie par un couplage hybride, ainsi que pour l'utilisation d'une pompe dépourvue d'un moteur hydraulique, selon le réclamation -1-, et par le mouvement de l'engrenage de couplage denté (44) de la position « A » à la position « B » par une fourche (45), ou par un électroaimant utilisé dans le couplage des arbres (27c) et (27d) avec la roue (L), d'une part, il regroupe les deux arbres libres dans un seul arbre de sortie rigide en distribuant avec un embrayage (38b), de sorte que le véhicule est capable de motion rétrograde, et, d'autre part, le couplage permanent des deux arbres libres en un seul et rigide arbre, fournit une application de système alternative dans aucune domaine.

9. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie, qui comprend d'une pompe à piston (P1) ou d'une alternative (P2) interconnectée avec des moteurs hydrauliques (26), un système utilisé dans les sources d'énergie renouvelables différentes ou similaires en vertu d'un couplage hydride pour la production d'énergie électrique dans la même CVT, ainsi que pour l'utilisation d'une pompe dépourvue d'un moteur hydraulique, selon la déclaration -1-, elle est **caractérisée par le fait que**, si les paramètres du générateur (G) sont réglées mécaniquement, un conduit (30a), avec un cylindre (Z) et le piston (J), se terminant par une tige (Jm) équipée d'un ressort de compression (23a), est utilisé pour que chaque changement de flux de la pompe (P1) au moteur (26) qui fluctue la pression du réseau, s'accompagne d'un changement correspondante du déplacement du piston (J), avec une tige coulissante (Jm) terminée sur un rhéostat externe, régulant ainsi l'armement du générateur.

10. Le système hydrostatique de transmission de puissance constamment variable auto-réglable équipé d'une pompe à cylindrée variable en temps réel, est placé entre un moteur et une charge externe variable. Ce système est applicable à l'industrie, au forage, au génie maritime, à la robotique ou à la production d'énergie, qui comprend d'une pompe à piston (P1) ou d'une alternative (P2) interconnectée avec des moteurs hydrauliques (26). Le système est utilisé soit dans l'industrie automobile, soit dans les sources d'énergie renouvelables différentes ou similaires, grâce à un couplage hybride, ainsi que pur l'utilisation d'une pompe dépourvue d'un moteur hydraulique, selon la déclaration -1-. Il se **caractérise par le fait que**, si les paramètres du générateur (G) sont régulés électroniquement, les parties mobiles de quelques capteurs électroniques (E1) et (E2) sont situées de manière circonférentielle sur les arbres (27b) et (27c) ou sur les arbres (6b) et (27a) respectivement, avec leurs parties stationnaires tournées l'une vers l'autre, afin de comparer la vitesse angulaire relative de chacun des arbres, tandis que l'armement de chaque générateur est activé par l'utilisation d'un processeur (PL).
